(19) European Patent Office

(11) **EP 4 773 306 A1**

(12) **EUROPEAN PATENT APPLICATION**
published in accordance with Art. 153(4) EPC


(43) Date of publication:
**08.07.2026 Bulletin 2026/28**

(21) Application number: **25852403.2**

(22) Date of filing: **05.08.2025**

(51) International Patent Classification (IPC):
***H01M 10/0567*** *(2010.01)* ***H01M 10/0569*** *(2010.01)*
***H01M 10/052*** *(2010.01)* ***H01M 4/133*** *(2010.01)*
***H01M 4/134*** *(2010.01)* ***H01M 4/36*** *(2006.01)*
***H01M 4/587*** *(2010.01)* ***H01M 4/38*** *(2006.01)*
***H01M 4/02*** *(2006.01)*

(52) Cooperative Patent Classification (CPC):
**H01M 4/02; H01M 4/133; H01M 4/134; H01M 4/36; H01M 4/38; H01M 4/587; H01M 10/052; H01M 10/0567; H01M 10/0569;** Y02E 60/10

(86) International application number:
**PCT/KR2025/011738**

(87) International publication number:
**WO 2026/034995 (12.02.2026 Gazette 2026/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.08.2024 KR 20240104253**



(71) Applicant: **LG Energy Solution, Ltd.**
**Seoul 07335 (KR)**

(72) Inventors:
- **JEONG, You Kyeong**
**Daejeon 34122 (KR)**
- **SUH, Soo Min**
**Daejeon 34122 (KR)**
- **OH, Young Ho**
**Daejeon 34122 (KR)**
- **IM, Tae Yeong**
**Daejeon 34122 (KR)**
- **LEE, Su Ji**
**Daejeon 34122 (KR)**
- **LEE, Chul Haeng**
**Daejeon 34122 (KR)**
- **AHN, Kyoung Ho**
**Daejeon 34122 (KR)**

(74) Representative: **Hoffmann Eitle**
**Patent- und Rechtsanwälte PartmbB**
**Arabellastraße 30**
**81925 München (DE)**


(54) **NONAQUEOUS ELECTROLYTE AND LITHIUM SECONDARY BATTERY COMPRISING SAME**


(57) The present disclosure relates to a non-aqueous electrolyte comprising a lithium salt, an organic solvent and an additive, wherein the additive includes a compound represented by Formula 1, and the additive includes at least one of the compound represented by Formula 1, ethylene sulfate, and 1,3-propane sultone, and the compound represented by Formula 1 is included in the non-aqueous electrolyte in an amount of 0.25 wt% to 1.60 wt%, and a total content of the compound represented by Formula 1, ethylene sulfate, and 1,3-propane sultone may be 0.25 wt% to1.60 wt% based on a total weight of the non-aqueous electrolyte.

[Formula 1]

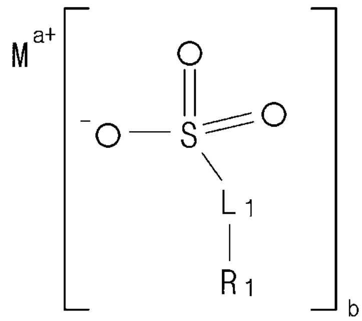

In Formula 1, $R_1$ is -O-$NO_2$, and $L_1$ is an alkyleneoxy group having 1 to 5 carbon atoms, M is a metal cation or


EP 4 773 306 A1

an organic cation, a is the valence of M when M is a metal cation, a is 1 when M is an organic cation, and a=b.

【FIG. 5】

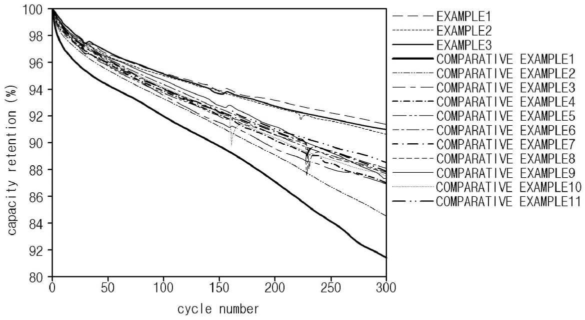

## Description

[TECHNICAL FIELD]

Cross-reference to Related Applications

This application claims priority from Korean Patent Application No. 10-2024-0104253, filed on August 5, 2024, the disclosure of which is incorporated by reference herein.

TECHNICAL FIELD

The present disclosure relates to a non-aqueous electrolyte and a lithium secondary battery comprising the same.

[BACKGROUND ART]

As dependence on electric energy is increasing in modern society, the development of a large-capacity power storage device that can stably supply power and increase production is in the spotlight. In addition, as the performance of electronic products from small electronic devices such as mobile phones to medium to large-sized electronic devices such as electric vehicles is improved, there is a growing need for high-capacity portable power. In the case of a lithium secondary battery having the highest potential, the lithium secondary battery satisfies high-capacity power storage performance, and thus has been utilized in various places from small electronic devices to electric vehicles (EVs) and power storage devices (ESSs).

The lithium secondary battery generally comprises a positive electrode including a positive electrode active material, a negative electrode including a negative electrode active material, an electrolyte serving as a mediator for transferring lithium ions, and a separator. In this case, a carbon-based active material, a silicon-based active material, a lithium transition metal oxide, a lithium metal, and the like can be used as the negative electrode active material. Further, a lithium transition metal oxide such as lithium cobalt oxide ($LiCoO_2$), lithium nickel oxide ($LiNiO_2$), a lithium nickel-cobalt-manganese composite oxide, or lithium iron phosphate can be used as the positive electrode active material.

When the lithium secondary battery is charged, lithium ions may be generated from the positive electrode, and the lithium ions may be stacked or converted into an alloy form in the negative electrode and stored, and the discharging process may proceed in the opposite direction. During the charging and discharging of the lithium secondary battery, the movement of lithium ions to the positive electrode and the negative electrode should, theoretically, be reversible, but the actual movement of lithium inside the lithium secondary battery may be partially irreversible. Specifically, the medium through which the lithium ions can be transferred is an electrolyte, and the lithium ions during charging are mostly deposited/alloyed inside the negative electrode active material, but some of the lithium ions are reduced together with the organic and inorganic materials constituting the electrolyte to form a nano-sized organic and inorganic composite on the surface of the negative electrode material, which is an irreversible permanent loss of the lithium ions provided by the positive electrode. The organic and inorganic film formed as such is referred to as a solid electrolyte interface layer (SEI layer). On the surface of the positive electrode active material, a solid-electrolyte interface layer may be formed through the oxidation reaction of a material constituting the electrolyte. When the solid electrolyte interface layer is formed, irreversible loss of lithium ions may be reduced, and a driving potential of the electrolyte may be widely secured to allow smooth reversible movement of the lithium ions between the positive electrode and the negative electrode. Such a solid electrolyte interface layer may also contribute to lowering an energy barrier required when lithium ions transfer charges to the negative electrode or the positive electrode depending on the components therein. Thus, the appropriate design of the solid-electrolyte interface layer has become a research task for improving the performance of lithium secondary batteries.

Specifically, the life characteristics and durability of the lithium secondary battery may be determined depending on the stability of the solid-electrolyte interface layer. For example, as the charging and discharging of the lithium secondary battery proceed, additional reduction of lithium ions may occur on the surface of the negative electrode material due to the instability of the initially formed solid-electrolyte interface layer, which may result in the formation of a film having a thickness greater than that of the initially formed solid-electrolytic interface layer. Due to the additional loss of lithium ions, an interfacial layer thicker than the initially generated solid-electrolyte interfacial layer may be additionally generated on the surface of the positive electrode material, or structural degradation of the positive electrode material may occur. This may be one of the causes of an increase in the resistance of the lithium secondary battery. When the lithium secondary battery is exposed to high temperatures, decomposition of materials constituting the electrolyte may occur, and thus, the performance of the electrolyte may deteriorate due to the generated side reactants, and the resistance of the lithium secondary battery may increase. As the lithium secondary battery is exposed to high temperatures and repeatedly charged and discharged, due to the increase in resistance, the positive electrode and the negative electrode may be driven

at voltages in states higher and lower than the state of the initial life, and thus, electrolyte oxidation and reduction reactions in the positive electrode and the negative electrode are accelerated to deteriorate the performance of the lithium secondary battery. Incidentally, due to the instability of the solid-electrolyte interface layer, continuous oxidation and reduction reaction of the electrolyte may occur, generating gas inside the lithium secondary battery. That is, from the viewpoint of stably driving lithium secondary batteries and ensuring battery performance such as long life, high-temperature durability, and a reduction in gas generation, it is an important task to enhance the stability of the solid-electrolyte interface layer.

[Prior Art References]

[Patent References]

Korean Patent Gazette No. 10-2377944

[DISCLOSURE OF THE INVENTION]

[TECHNICAL PROBLEM]

The present disclosure aims to address the above problems, and provides a non-aqueous electrolyte that can enhance the stability of the solid-electrolyte interface layer formed on the negative and positive electrodes, enhance the structural stability of the positive electrode by suppressing lithium loss of the positive electrode, and include components having low resistance, thereby securing excellent durability and stability at low temperatures, room temperature and high temperatures.

In addition, the present disclosure aims to provide a lithium secondary battery with improved overall performance, in which low-temperature life, low-temperature output, high-speed charging, room temperature life, high-temperature storage characteristics, and high-temperature life characteristics are improved by including the non-aqueous electrolyte.

[TECHNICAL SOLUTION]

[1] The present disclosure provides a non-aqueous electrolyte comprising a lithium salt, an organic solvent and an additive, wherein the additive includes a compound represented by Formula 1, and the additive includes at least one of the compound represented by the following Formula 1, ethylene sulfate, and 1,3-propane sultone, and the compound represented by Formula 1 is included in the non-aqueous electrolyte in an amount of 0.25 wt% to 1.60 wt%, and a total content of the compound represented by Formula 1, ethylene sulfate, and 1,3-propane sultone is 0.25 wt% to 1.60 wt% based on the total weight of the non-aqueous electrolyte.

[Formula 1]

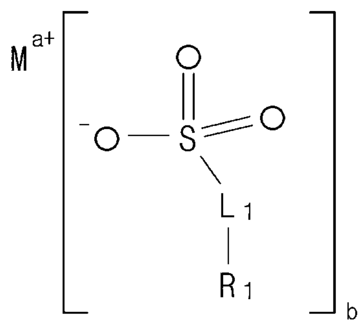

In Formula 1 above, $R_1$ is $-O-NO_2$, and $L_1$ is an alkyleneoxy group having 1 to 5 carbon atoms, M is a metal cation or an organic cation, wherein a is the valence of M when M is a metal cation, and a is 1 when M is an organic cation, and a=b.

[2] The present disclosure provides the non-aqueous electrolyte according to [1], wherein M is a metal cation, and M is any one selected from the group consisting of Li, K, Ca, Mg and Cs.

[3] The present disclosure provides the non-aqueous electrolyte according to one or more of the above [1] and [2], wherein M is an organic cation, and M is any one selected from the group consisting of compounds represented by the

following formulae M-1 to M-6.

[Formula M-1]

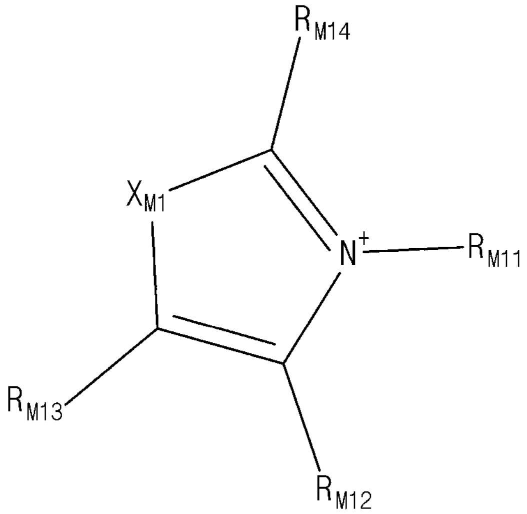

In Formula M-1 above, $X_{M1}$ is -N($R_{M15}$) - or -S-, and $R_{M11}$, $R_{M12}$, $R_{M13}$, $R_{M14}$ and $R_{M15}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms.

[Formula M-2]

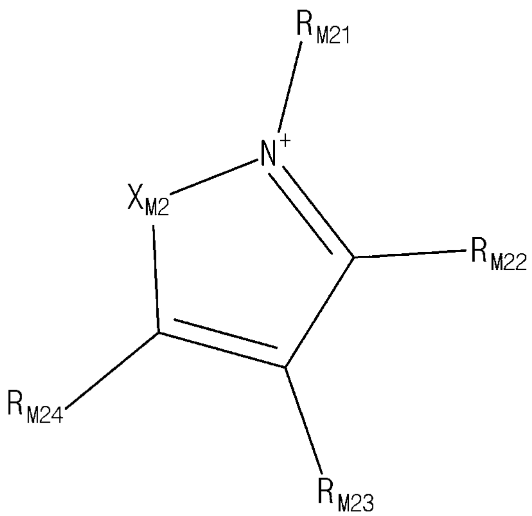

In Formula M-2 above, $X_{M2}$ is -N($R_{M25}$) - or -S-, and $R_{M21}$, $R_{M22}$, $R_{M23}$, $R_{M24}$ and $R_{M25}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms.

[Formula M-3]

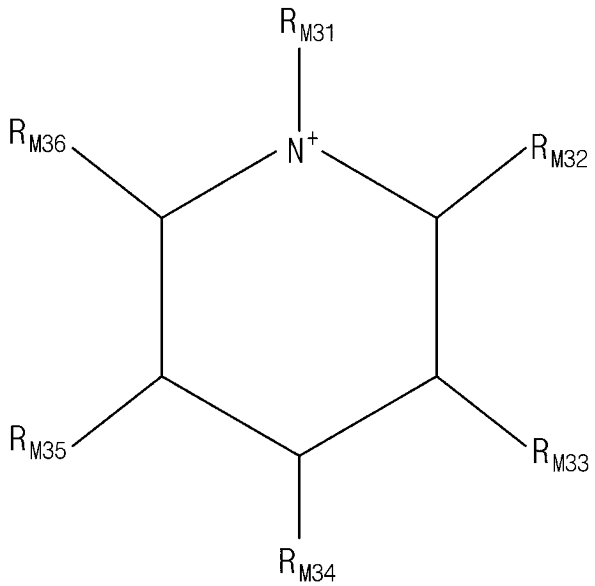

In Formula M-3 above, $R_{M31}$, $R_{M32}$, $R_{M33}$, $R_{M34}$, $R_{M35}$ and $R_{M36}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms.

[Formula M-4]

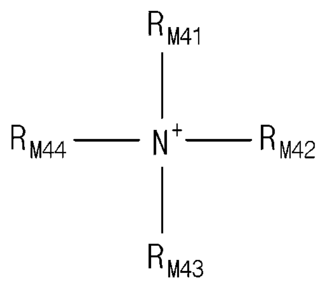

In Formula M-4 above, $R_{M41}$, $R_{M42}$, $R_{M43}$ and $R_{M44}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of $R_{M41}$, $R_{M42}$, $R_{M43}$ and $R_{M44}$ may be bonded to each other to form an aliphatic hydrocarbon ring.

[Formula M-5]

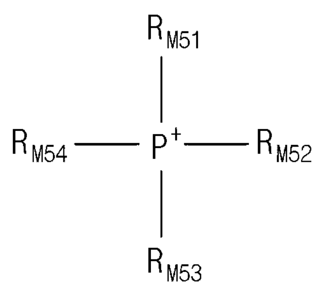

In Formula M-5 above, $R_{M51}$, $R_{M52}$, $R_{M53}$ and $R_{M54}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of $R_{M51}$, $R_{M52}$, $R_{M53}$ and $R_{M54}$ may be bonded to each other to form an aliphatic hydrocarbon ring.

[Formula M-6]

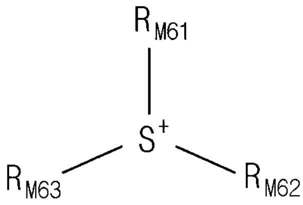

In Formula M-6 above, $R_{M61}$, $R_{M62}$ and $R_{M63}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of $R_{M61}$, $R_{M62}$ and $R_{M63}$ may be bonded to each other to form an aliphatic hydrocarbon ring.

The present disclosure provides a non-aqueous electrolyte according to one or more of the above [1] to [3], the compound represented by Formula 1 above includes a compound represented by the following Formula 1-A.

[Formula 1-A]

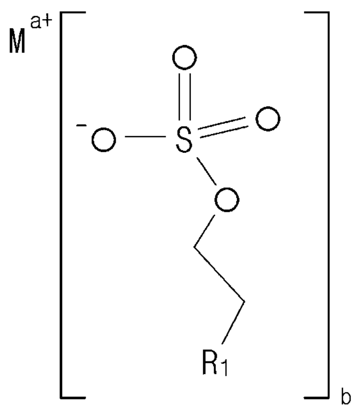

In Formula 1-A above, each of M, a, b and $R_1$ is as defined in Formula 1 above.

The present disclosure provides a non-aqueous electrolyte according to one or more of the above [1] to [4], the compound represented by Formula 1 above includes a compound represented by the following Formula 1-A-1.

[Formula 1-A-1]

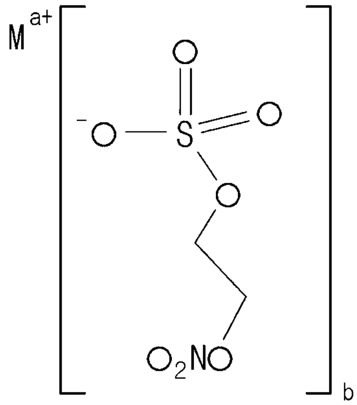

In Formula 1-A-1 above, each of M, a, and b is as defined in Formula 1 above.

The present disclosure provides a non-aqueous electrolyte according to one or more of the above [1] to [5], the compound represented by Formula 1 above includes a compound represented by the following Formula 1-a-1.

[Formula 1-a-1]

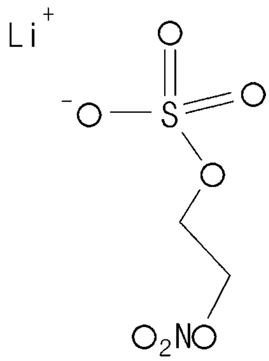

The present disclosure provides a non-aqueous electrolyte according to one or more of the above [1] to [6], a total content of the compound represented by Formula 1 above, ethylene sulfate, and 1,3-propane sultone is 0.75 wt% to 1.60 wt% based on the total weight of the non-aqueous electrolyte.

The present disclosure provides a non-aqueous electrolyte according to one or more of the above [1] to [7], the additive further comprises at least one selected from a cyclic carbonate-based compound, a nitrile-based compound, a benzene-based compound, a lithium salt-based compound, an amine-based compound, and a silane-based compound.

The present disclosure provides a non-aqueous electrolyte according to one or more of the above [1] to [8], the organic solvent includes a carbonate-based organic solvent.

The present disclosure provides a non-aqueous electrolyte according to one or more of the above [1] to [9], the carbonate-based organic solvent includes a cyclic carbonate-based organic solvent and a linear carbonate-based organic solvent.

The present disclosure provides a lithium secondary battery, comprising a positive electrode, a negative electrode facing the positive electrode, a separator disposed between the negative electrode and the positive electrode, and a non-aqueous electrolyte according to one or more of the above [1] to [10].

The present disclosure provides a lithium secondary battery according to the above [11], the negative electrode includes a negative electrode active material, wherein the negative electrode active material includes at least one selected from a carbon-based active material and a silicon-based active material.

The present disclosure provides a lithium secondary battery according to one or more of the above [11] and [12], the negative electrode includes a negative electrode active material, wherein the negative electrode active material includes at least one selected from a carbon-based active material and a silicon-based active material.

[ADVANTAGEOUS EFFECTS]

The non-aqueous electrolyte according to the present disclosure includes an additive, wherein the additive includes a compound in the form of a salt containing an organosulfonyl group and nitrogen and oxygen (compound

represented by Formula 1) in a specific content range. In addition, the additive may optionally include ethylene sulfate and/or 1,3-propane sultone together with the compound represented by Formula 1 above, and the content range thereof is adjusted to a specific range. When the content is within the above range, a film capable of reducing resistance while having strong durability can be formed on the positive and negative electrode surfaces. Therefore, when such a non-aqueous electrolyte of the present disclosure is applied to a lithium secondary battery, excellent life performance and storage performance can be exhibited even under conditions such as high temperatures and high voltages, and output performance at low temperatures can be improved.

[BRIEF DESCRIPTION OF THE DRAWINGS]

FIG. 1 shows the XIC results for the compound represented by Formula 1-a-1.
FIG. 2 shows an MS spectrum for the compound represented by Formula 1-a-1.
FIG. 3 shows MS/MS analysis results (Tandem MS, double mass spectrometry) for the compound represented by Formula 1-a-1.
FIG. 4 shows the $^1$H-NMR spectrum for a preparation solution of the compound represented by Formula 1-a-1.
FIG. 5 is an evaluation graph of the cycle capacity retention rate of a lithium secondary battery according to the Examples and Comparative Examples.

[MODE FOR CARRYING OUT THE INVENTION]

It will be understood that terms or words used in the present disclosure and claims are used merely to describe exemplary embodiments, and shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

For example, it will be further understood that the terms "include," "comprise," or "have" in this disclosure specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the disclosure each denote the number of carbon atoms included in a specific functional group. That is, the functional group may include "a" to "b" carbon atoms. For example, an "alkylene group having 1 to 5 carbon atoms" refers to an alkylene group including carbon atoms with a carbon number of 1 to 5, that is, $-CH_2-$, $-CH_2CH_2-$, $-CH_2CH_2CH_2-$, $-CH_2(CH_2)CH-$, $- CH_2CH_2CH_2CH_2CH_2-$ and $-CH(CH_2) CH_2CH_2-$ .

In addition, in the present specification, the term "alkylene group" refers to a branched or unbranched aliphatic hydrocarbon group or a functional group in a form in which one hydrogen atom is removed from each carbon atom located at both ends of the aliphatic hydrocarbon group. In an embodiment, the alkylene group may be substituted or unsubstituted. The alkylene group includes, but is not limited to, a methylene group, an ethylene group, a propylene group, an isopropylene group, a butylene group, an isobutylene group, a tert-butylene group, a pentylene group, a 3-pentylene group, and the like, each of which may be optionally substituted in other embodiments.

Unless otherwise defined in the specification, the expression "substitution" denotes that at least one hydrogen bonded to carbon is substituted with another element such as fluorine.

In addition, unless otherwise specified in the present disclosure, the expression "*" denotes binding sites in a formula.

Hereinafter, the present disclosure will be described in more detail.

## Non-aqueous electrolyte

The present disclosure relates to a non-aqueous electrolyte, and more specifically a non-aqueous electrolyte for a lithium secondary battery.

Specifically, the non-aqueous electrolyte of the present disclosure comprises a lithium salt; an organic solvent; and an additive, wherein the additive includes a compound represented by the following Formula 1, and the additive includes at least one of a compound represented by the following Formula 1, ethylene sulfate, and 1,3-propane sultone; and the compound represented by Formula 1 is included in the non-aqueous electrolyte in an amount of 0.25 wt% to 1.60 wt%, and a total content of the compound represented by Formula 1, ethylene sulfate, and 1,3-propane sultone is 0.25 wt% to 1.60 wt% based on the total weight of the non-aqueous electrolyte.

[Formula 1]

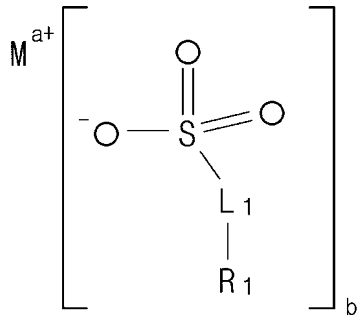

In Formula 1, $R_1$ is -O-$NO_2$, and $L_1$ is an alkyleneoxy group having 1 to 5 carbon atoms, M is a metal cation or an organic cation, a is the valence of M when M is a metal cation, a is 1 when M is an organic cation, and a=b.

The non-aqueous electrolyte according to the present disclosure includes an additive, wherein the additive includes a compound in the form of a salt containing an organosulfonyl group and nitrogen and oxygen (compound represented by Formula 1) in a specific content range. In addition, the additive may optionally include ethylene sulfate and/or 1,3-propane sultone together with the compound represented by Formula 1 above, and the content range thereof is adjusted to a specific range. When the content is within the above range, a film capable of reducing resistance while having strong durability can be formed on the positive and negative electrode surfaces. Therefore, when such a non-aqueous electrolyte of the present disclosure is applied to a lithium secondary battery, excellent life performance and storage performance can be exhibited even under conditions such as high temperatures and high voltages, and output performance at low temperatures can be improved.

1) Lithium salt

As the lithium salt used in the present disclosure, various lithium salts commonly used in a non-aqueous electrolyte for a lithium secondary battery may be used without limitation. For example, the lithium salt may include $Li^+$ as a cation, and may include at least one selected from the group consisting of $F^-$, $Cl^-$ , $Br^-$, $I^-$, $NO_3^-$, $N(CN)_2^-$, $BF_4^-$, $ClO_4^-$, $AlO_2^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$ and $(CF_3CF_2SO_2)_2N^-$ as an anion.

Specifically, the lithium salt includes at least one selected from the group consisting of LiCl, LiBr, LiI, $LiBF_4$, $LiClO_4$, $LiAlO_2$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$) , $LiCF_3SO_3$, LiFSI ($LiN(SO_2F)_2$), $LiCH_3SO_3$, $LiCF_3CO_2$, $LiCH_3CO_2$ and LiBETI ($LiN(SO_2CF_2CF_3)_2$). Specifically, the lithium salt includes at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$) and LiBETI ($LiN(SO_2CF_2CF_3)_2$) .

The lithium salt may be included in the non-aqueous electrolyte at a concentration of 0.5M to 5.0M, specifically, 0.8M to 4.0M, and more specifically 0.8M to 2.5M. In the case in which the concentration of the lithium salt satisfies the above range, this may improve the $Li^+$ transference number and the degree of dissociation of lithium ions, thereby improving the output characteristics of the battery.

Alternatively, the lithium salt may be included in the non-aqueous electrolyte in a balance amount excluding, for example, the organic solvent and additive described later.

2) Organic Solvent

The organic solvent is a non-aqueous solvent commonly used in lithium secondary batteries, and is not limited as long as decomposition due to an oxidation reaction or the like during the charging and discharging of the battery can be minimized.

The organic solvent may be included in the non-aqueous electrolyte in a balance amount excluding, for example, the lithium salt and the additive.

Specifically, the organic solvent may include a carbonate-based organic solvent. The carbonate-based organic solvent may specifically include at least one selected from a cyclic carbonate-based organic solvent and a linear carbonate-based organic solvent, and more specifically may include the cyclic carbonate-based organic solvent and linear carbonate-based organic solvent.

More specifically, the cyclic carbonate-based organic solvent is an organic solvent having high viscosity and a

high dielectric constant, and thus, is an organic solvent capable of dissociating a lithium salt well in an electrolyte, specific examples thereof may include at least one organic solvent selected from ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate, more specifically, may include at least one selected from the group consisting of ethylene carbonate (EC) and fluoroethylene carbonate (FEC), and even more specifically may include ethylene carbonate (EC).

In addition, the linear carbonate-based organic solvent is an organic solvent having low viscosity and a low dielectric constant, specifically may include at least one organic solvent selected from dimethyl carbonate (DMC), diethyl carbonate (DEC), dipropyl carbonate (DPC), ethylmethyl carbonate (EMC), methylpropyl carbonate (MPC) and ethylprolyl carbonate (EPC), and more specifically, may include at least one selected from ethylmethyl carbonate and dimethyl carbonate. Even more specifically, it may include ethylmethyl carbonate and dimethyl carbonate.

When the carbonate-based organic solvent includes a cyclic carbonate-based organic solvent and a linear carbonate-based organic solvent, the weight ratio of the cyclic carbonate-based organic solvent to the linear carbonate-based organic solvent may be 10:90 to 50:50, specifically 15:85 to 45:55, more specifically 15:85 to 40:60, and even more specifically 20:80 to 40:60.

The organic solvent may further include at least one of an ester-based organic solvent, an ether-based organic solvent, a glyme-based solvent, and a nitrile-based organic solvent, together with the carbonate-based organic solvent.

The ester-based organic solvent may include at least one selected from a linear ester-based organic solvent and a cyclic ester-based organic solvent. The linear ester-based organic solvent may include at least one selected from methyl acetate, ethyl acetate, propyl acetate, butyl acetate, methyl propionate, ethyl propionate, propyl propionate, and butyl propionate. In addition, the cyclic ester-based organic solvent specifically may include at least one selected from the group consisting of γ-butyrolactone, γ-valerolactone, γ-caprolactone, σ-valerolactone, and ε-caprolactone.

Any one selected from dimethyl ether, diethyl ether, dipropyl ether, methylethyl ether, methylpropyl ether, ethylpropyl ether, 1,3-dioxolane (DOL), and 2,2-bis(trifluoromethyl)-1,3-dioxolane (TFDOL), and a mixture of two or more thereof may be used as the ether-based solvent, but is not limited thereto.

The glyme-based solvent has a high dielectric constant and low surface tension compared to linear carbonate-based organic solvents, and may include at least one selected from dimethoxyethane (glyme, DME), diethoxyethane, diglyme, triglyme, and tetra-glyme (TEGDME) as a solvent with low reactivity with metals, but is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The organic solvent may consist solely of the carbonate-based organic solvent. Even if only the carbonate-based organic solvent is used as the organic solvent, it is preferable as the non-aqueous electrolyte component, such as the additive described below, can be easily dissolved, and the mobility of the lithium salt and the appropriate viscosity of the non-aqueous electrolyte can be implemented.

3) Additive

The additive includes a compound represented by the following Formula 1. Further, the compound represented by Formula 1 above is included in an amount of 0.25 wt% to 1.60 wt% in the above non-aqueous electrolyte. The compound represented by Formula 1 above is included in an amount of 0.25 wt% to 1.60 wt% based on the total weight of the non-aqueous electrolyte.

[Formula 1]

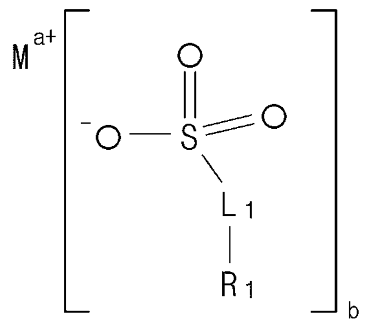

In Formula 1, $R_1$ is -O-$NO_2$, and $L_1$ is an alkyleneoxy group having 1 to 5 carbon atoms, M is a metal cation or an organic cation, a is the valence of M when M is a metal cation, a is 1 when M is an organic cation, and a=b.

The compound represented by Formula 1 above contains a salt-form compound containing an organosulfonyl group, nitrogen, and oxygen, thereby forming a film with strong durability on the positive and negative electrode surfaces and can reduce resistance.

Specifically, the compound represented by Formula 1 above includes an organosulfonyl group in its structure so that it is reductively decomposed before the organic solvent during charging and discharging, thereby uniformly forming on the negative electrode surface a solid-electrolyte interface layer containing lithium sulfide and lithium sulfur oxides, which is excellent in terms of ionic conductivity. Since it can function as an effective ion transporter, degradation of the negative electrode and the positive electrode is suppressed, and as the solid-electrolyte interface layer derived from the functional group has excellent durability, degradation of the solid-electrolyte interface layer and the resulting problem of transition metal elution from the positive electrode can be prevented. In addition, the compound represented by Formula 1 included as the additive may contain nitrogen as an anionic terminal group in the structure to form a solid-electrolyte interface layer containing lithium nitride, lithium nitrate, lithium oxide, etc. on the surface of the negative electrode. This can improve the lithium ion diffusivity within the solid-electrolyte interface layer, reduce resistance, have excellent high-temperature durability, which minimizes reversible lithium ion loss, and prevents side reactions between the electrolyte and the positive electrode, thereby effectively suppressing transition metal elution from the positive electrode.

In addition, in the case of an existing lithium nitrate-based additive (e.g., $LiNO_3$), when it is introduced into an electrode film component, the growth of the non-uniform solid-electrolyte interface layer induces a reduction reaction of the organic solvent, leading to a problem of increased resistance and deteriorated output performance. In addition, a lithium nitrate-based additive has a problem in that it is hardly soluble in a carbonate-based organic solvent, etc. On the other hand, the compound represented by Formula 1 above according to the present disclosure is a salt-form compound containing an organosulfonyl group and nitrogen and is capable of forming a uniform solid-electrolyte interface layer, suppressing the reduction reaction of an organic solvent, and of forming an electrode film having low resistance, and improving output performance even under low-temperature conditions in which the transport characteristics of lithium ions are problematic.

In particular, when the compound represented by Formula 1 above is used as an electrolyte additive, the uniform formation of the solid-electrolyte interface layer is achieved by simultaneously containing an organosulfonyl group and nitrogen in one compound structure. When a substance that does not simultaneously contain an organosulfonyl group and nitrogen in a compound, such as lithium nitrate and cyclic sulfate, is used as the electrolyte additive, the solid-electrolyte interface layer is formed in a particulate form or in a non-uniform form, making it impossible to achieve the effects of preventing the reduction decomposition of the organic solvent, forming a low-resistance film, suppressing the elution of transition metals from the positive electrode, preventing the reduction reaction of transition metal ions, etc.

That is, the compound represented by Formula 1 above can achieve a robust and highly durable electrode film without deteriorating the transport characteristics and output performance of lithium ions. Accordingly, the non-aqueous electrolyte including the compound represented by Formula 1 above can effectively protect the electrode in an environment, in which side reactions of the electrolyte, positive electrode collapse, or SEI film breakage of the negative electrode are likely to occur, such as high temperature and high voltage, thereby significantly improving the life performance and storage performance of the lithium secondary battery, particularly under high temperature and high voltage. That is, the compound represented by Formula 1 above is highly preferable in terms of achieving the effects of improving the output performance, life performance, and storage performance of the lithium secondary battery.

The compound represented by Formula 1 above is included in an amount of 0.25 wt% to 1.60 wt% in the above non-aqueous electrolyte. If the compound represented by Formula 1 above is contained in the non-aqueous electrolyte in an amount of less than 0.25 wt%, it is difficult to sufficiently form an inorganic film containing lithium-nitrogen bond, lithium-oxygen bond, lithium-sulfur bond, etc. on the positive and the negative electrode surfaces. If the compound represented by Formula 1 above is included in the non-aqueous electrolyte in an amount exceeding 1.60 wt%, problems such as side reactions, deteriorated capacity, and increased resistance due to the additive may occur. Therefore, in order to exhibit the effects resulting from the application of the compound represented by Formula 1 described above, it should be used within the above-described range, thereby uniformly forming a robust inorganic film containing lithium-nitrogen bond, lithium-oxygen bond, lithium-sulfur bond, etc. on the positive electrode and the negative electrode surfaces, while suppressing the disadvantages of side reactions, deteriorated capacity, and increased resistance due to the additive as much as possible, thereby effectively suppressing transition metal elution from the positive electrode and side reactions between the electrolyte and the electrode while operating effectively as an ion transporter. As a result, excellent high-temperature durability and low-temperature output performance can be achieved.

Specifically, the compound represented by Formula 1 above may be included in the non-aqueous electrolyte in an amount of 0.25 wt% or more, 0.28 wt% or more, 0.30 wt% or more, 0.40 wt% or more, 0.50 wt% or more, 0.60 wt% or more, 0.70 wt% or more, 0.80 wt% or more, 0.90 wt% or more, 1.0 wt% or more, 1.20 wt% or more, 1.30 wt% or more, 1.40 wt% or more, or 1.45 wt% or more. The compound represented by Formula 1 above may be included in the non-aqueous

electrolyte in an amount of 1.60 wt% or less, 1.50 wt% or less, 1.45 wt% or less, 1.40 wt% or less, 1.30 wt% or less, 1.20 wt% or less, 1.10 wt% or less, 1.0 wt% or less, 0.90 wt% or less, 0.80 wt% or less, 0.70 wt% or less, 0.60 wt% or less, 0.50 wt% or less, 0.40 wt% or less, or 0.35 wt% or less. The above ranges can be combined with each other without limitation.

In Formula 1 above, M may be a metal cation or an organic cation.

Specifically, when M is a metal cation, M may be any one selected from Li, K, Ca, Mg and Cs, and may be, for example, Li.

In addition, when M is an organic cation (i.e., a cation in the form of an organic compound), M may be any one selected from compounds represented by Formula M-1 to Formula M-6.

[Formula M-1]

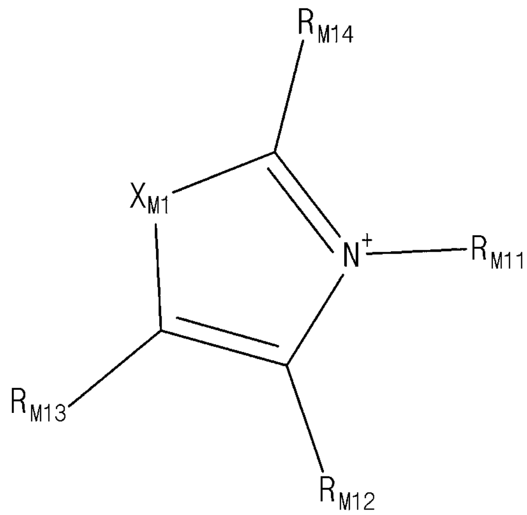

In Formula M-1 above, $X_{M1}$ is -N($R_{M15}$) - or -S-, and $R_{M11}$, $R_{M12}$, $R_{M13}$, $R_{M14}$ and $R_{M15}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, $R_{M11}$, $R_{M12}$, $R_{M13}$, $R_{M14}$ and $R_{M15}$ may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, $R_{M11}$, $R_{M12}$, $R_{M13}$, $R_{M14}$ and $R_{M15}$ may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-$CH_2CH=CH_2$), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, a methoxy group, or an ethoxy group.

[Formula M-2]

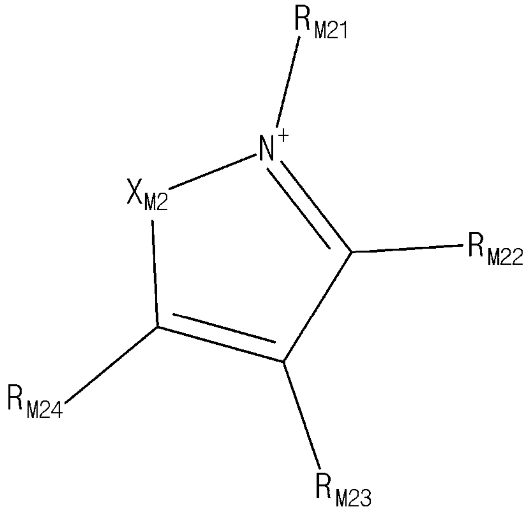

In Formula M-2 above, $X_{M2}$ is -N($R_{M25}$)- or -S-. Specifically, $R_{M21}$, $R_{M22}$ , $R_{M23}$, $R_{M24}$ and $R_{M25}$ may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 2 to 12 carbon atoms. Specifically, $R_{M21}$, $R_{M22}$, $R_{M23}$, $R_{M24}$ and $R_{M25}$ may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, in Formula M-2 above, $R_{M21}$, $R_{M22}$, $R_{M23}$, $R_{M24}$ and $R_{M25}$ may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group ($*-CH_2CH=CH_2$), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group.

[Formula M-3]

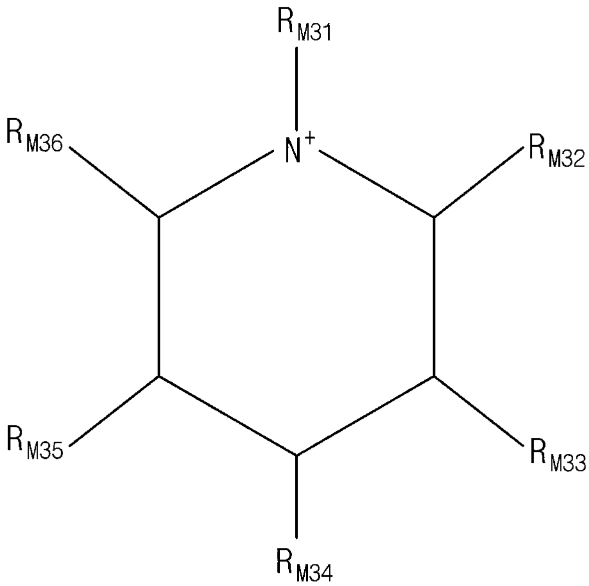

In Formula M-3 above, $R_{M31}$, $R_{M32}$, $R_{M33}$, $R_{M34}$, $R_{M35}$ and $R_{M36}$ are each independently hydrogen, an alkyl group having 1 to 12 carbon atoms, an alkenyl group having 2 to 12 carbon atoms, an alkynyl group having 2 to 12 carbon atoms,

an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, $R_{M31}$, $R_{M32}$ , $R_{M33}$, $R_{M34}$, $R_{M35}$ and $R_{M36}$ may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, $R_{M31}$, $R_{M32}$, $R_{M33}$, $R_{M34}$, $R_{M35}$ and $R_{M36}$ may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-$CH_2CH=CH_2$), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group.

[Formula M-4]

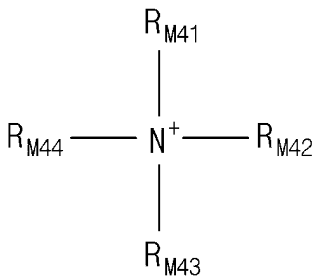

In Formula M-4 above, $R_{M41}$, $R_{M42}$, $R_{M43}$ and $R_{M44}$ may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, $R_{M41}$, $R_{M42}$, $R_{M43}$ and $R_{M44}$ may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, $R_{M41}$, $R_{M42}$, $R_{M43}$ and $R_{M44}$ may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-$CH_2CH=CH_2$), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group. Further, at least two of $R_{M41}$, $R_{M42}$, $R_{M43}$ and $R_{M44}$ may be bonded to each other to form an aliphatic ring, and specifically, at least two of $R_{M41}$, $R_{M42}$, $R_{M43}$ and $R_{M44}$ are an alkyl group having 1 to 5 carbon atoms or an alkyl group having 2 to 3 carbon atoms, and these may be bonded to each other to form an aliphatic hydrocarbon ring.

[Formula M-5]

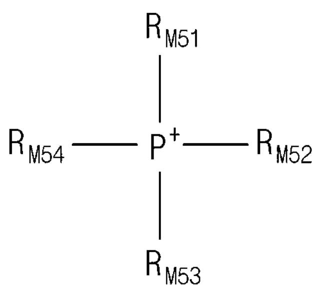

In Formula M-5 above, $R_{M51}$, $R_{M52}$, $R_{M53}$ and $R_{M54}$ may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, $R_{M51}$, $R_{M52}$, $R_{M53}$ and $R_{M54}$ may be each independently hydrogen, an alkyl group having 1 to 5 carbon atoms, an alkenyl group having 2 to 5 carbon atoms, an

alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, $R_{M51}$, $R_{M52}$, $R_{M53}$ and $R_{M54}$ may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-$CH_2CH=CH_2$), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group. Further, at least two of $R_{M51}$, $R_{M52}$, $R_{M53}$ and $R_{M54}$ may be bonded to each other to form an aliphatic ring, and specifically, at least two of $R_{M51}$, $R_{M52}$, $R_{M53}$ and $R_{M54}$ are an alkyl group having 1 to 5 carbon atoms or an alkyl group having 2 to 3 carbon atoms, and these may be bonded to each other to form an aliphatic hydrocarbon ring.

[Formula M-6]

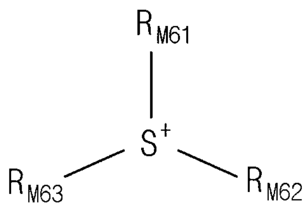

In Formula M-6 above, $R_{M61}$, $R_{M62}$ and $R_{M63}$ may be each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms. Specifically, $R_{M61}$, $R_{M62}$ and $R_{M63}$ may be each independently hydrogen, an alkyl group having 1 to 5 carbon atoms, an alkenyl group having 2 to 5 carbon atoms, an alkynyl group having 2 to 5 carbon atoms, an aryl group having 6 to 12 carbon atoms, a cyanoalkyl group having 2 to 5 carbon atoms, an alkoxyalkyl group having 2 to 10 carbon atoms or an alkoxy group having 1 to 5 carbon atoms. More specifically, $R_{M61}$, $R_{M62}$ and $R_{M63}$ may each independently be hydrogen, a methyl group, an ethyl group, a propyl group, a butyl group, a pentyl group, a hexyl group, a heptyl group, an octyl group, a nonyl group, a decyl group, an undecyl group, a dodecyl group, an allyl group (*-$CH_2CH=CH_2$), a phenyl group, a cyanomethyl group, a 2-cyanoethyl group, a 3-cyanopropyl group, a 4-cyanobutyl group, a methoxymethyl group, a 2-methoxyethyl group, a 3-methoxypropyl group, an ethoxymethyl group, a 2-ethoxyethyl group, a 3-ethoxypropyl group, a methoxy group, or an ethoxy group. Further, at least two of $R_{M61}$, $R_{M62}$ and $R_{M63}$ may be bonded to each other to form an aliphatic ring, and specifically, at least two of $R_{M61}$, $R_{M62}$ and $R_{M63}$ are an alkyl group having 1 to 5 carbon atoms or an alkyl group having 2 to 3 carbon atoms, and these may be bonded to each other to form an aliphatic hydrocarbon ring.

Here, in Formula M-1 to Formula M-6 above, an alkoxyalkyl group having 2 to 10 carbon atoms may be represented as, for example, $R_{j2}$-O-$R_{j1}$-* (wherein * is a bonding site). Here, $R_{j1}$ and $R_{j2}$ may each independently be an alkyl group having 1 to 5 carbon atoms, and specifically may each independently be a methyl group, an ethyl group, a propyl group, a butyl group, or a pentyl group.

For example, the compound represented by Formula M-1 above includes at least one compound selected from the group consisting of compounds represented by Formula M-1-1 to Formula M-1-10 below.

[Formula M-1-1]

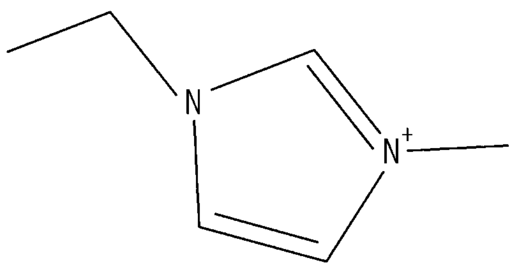

[Formula M-1-2]

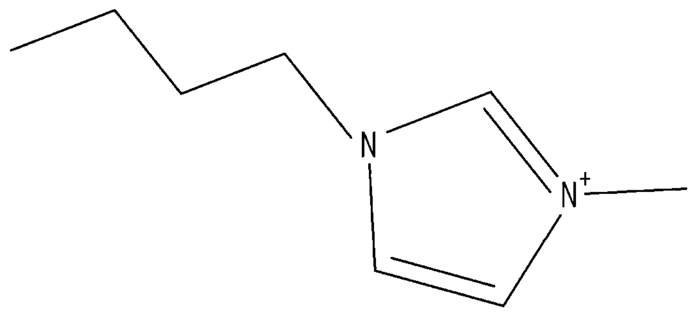

[Formula M-1-3]

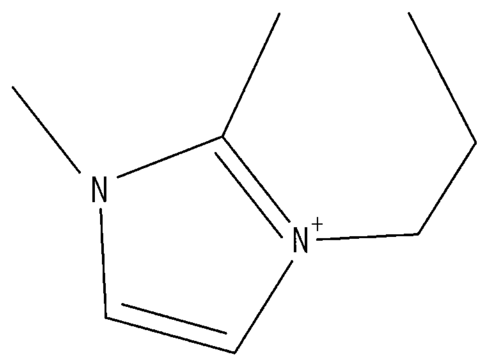

[Formula M-1-4]

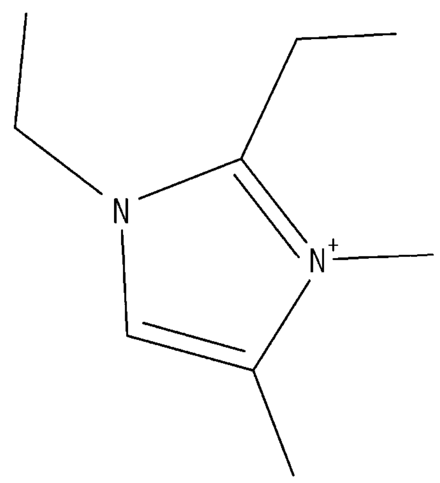

[Formula M-1-5]

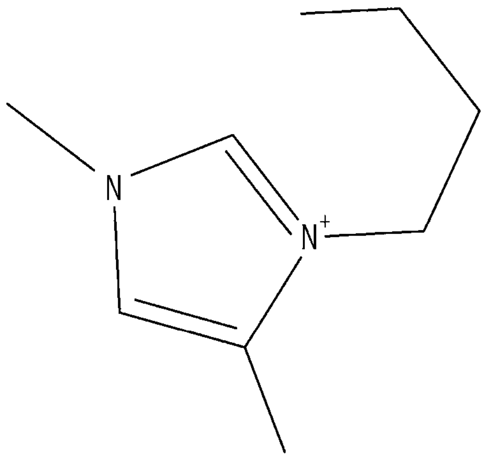

[Formula M-1-6]

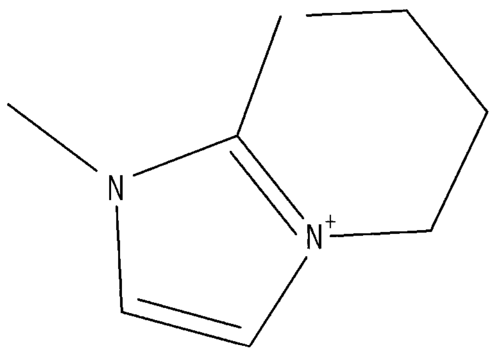

[Formula M-1-7]

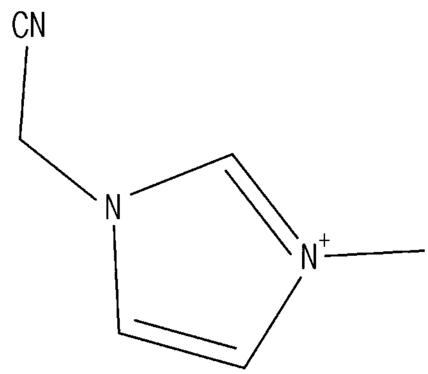

[Formula M-1-8]

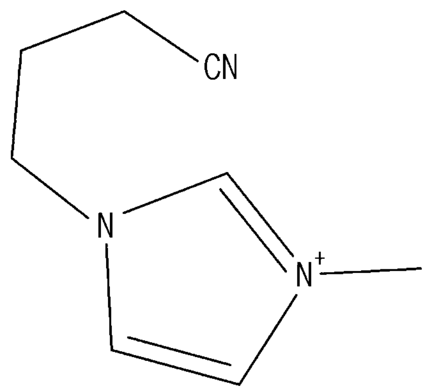

[Formula M-1-9]

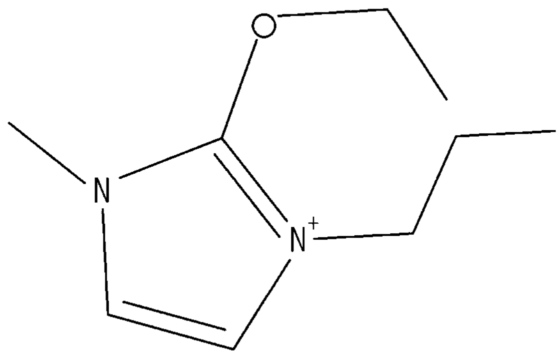

[Formula M-1-10]

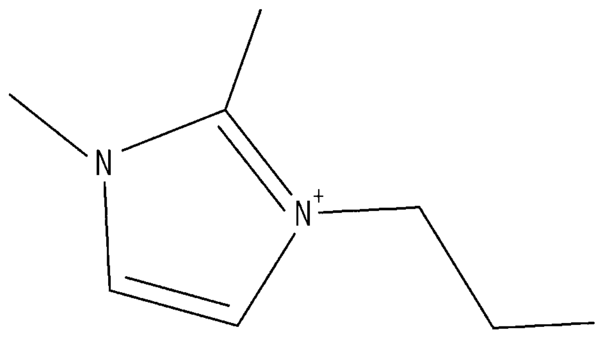

The compound represented by Formula M-2 above may be at least one compound selected from the group consisting of compounds represented by Formula M-2-1 to Formula M-2-3 below.

[Formula M-2-1]

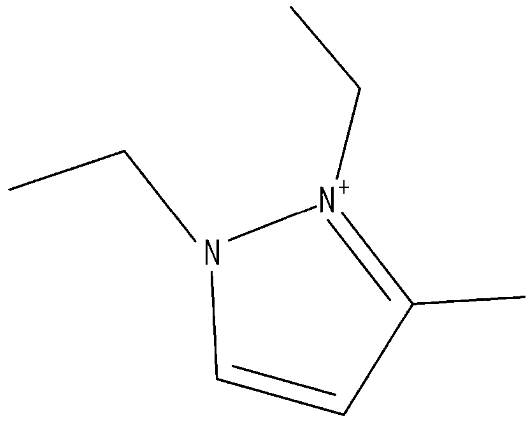

[Formula M-2-2]

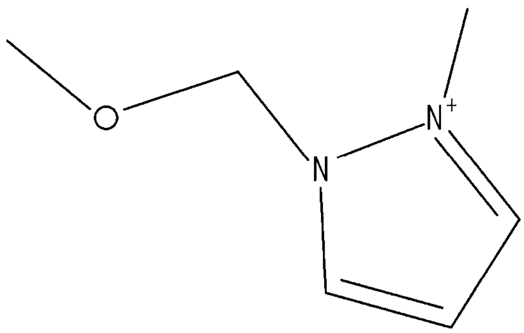

[Formula M-2-3]

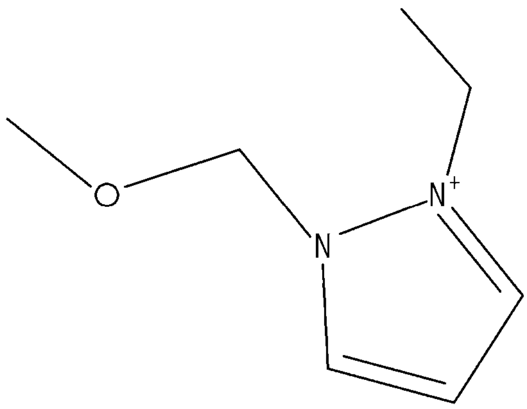

The compound represented by Formula M-3 above may be at least one compound selected from the group consisting of compounds represented by Formula M-3-1 to Formula M-3-6 below.

[Formula M-3-1]

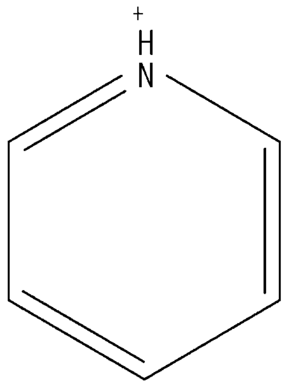

[Formula M-3-2]

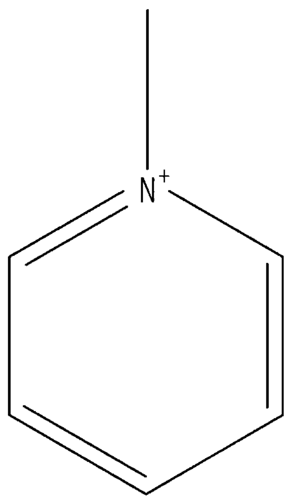

[Formula M-3-3]

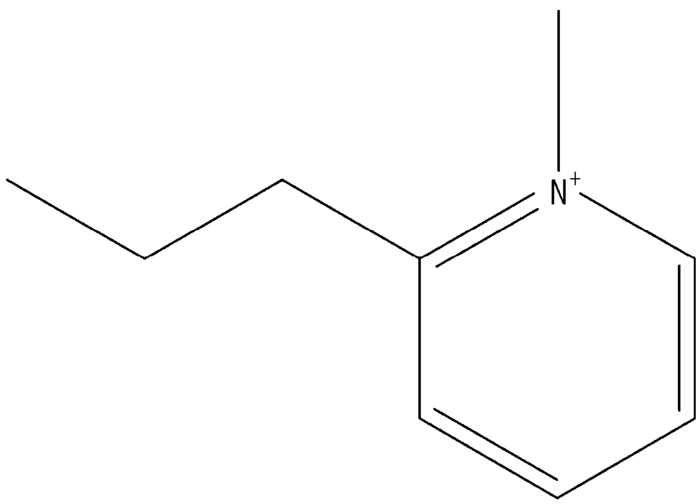

[Formula M-3-4]

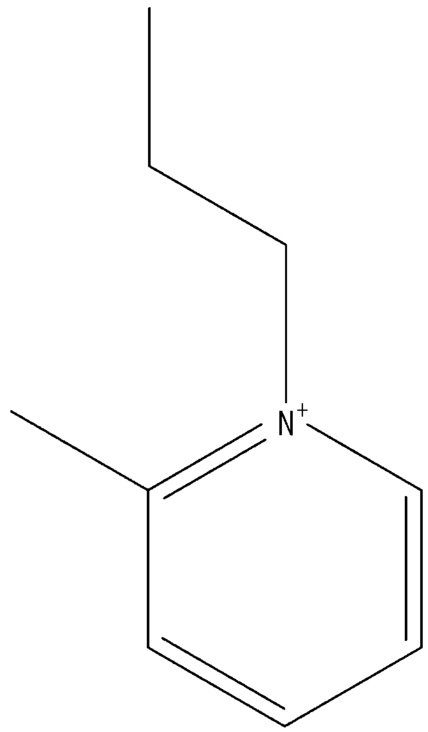

[Formula M-3-5]

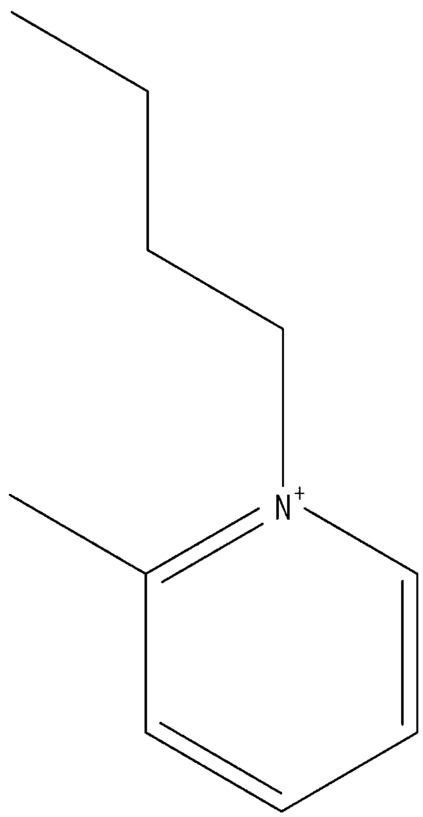

[Formula M-3-6]

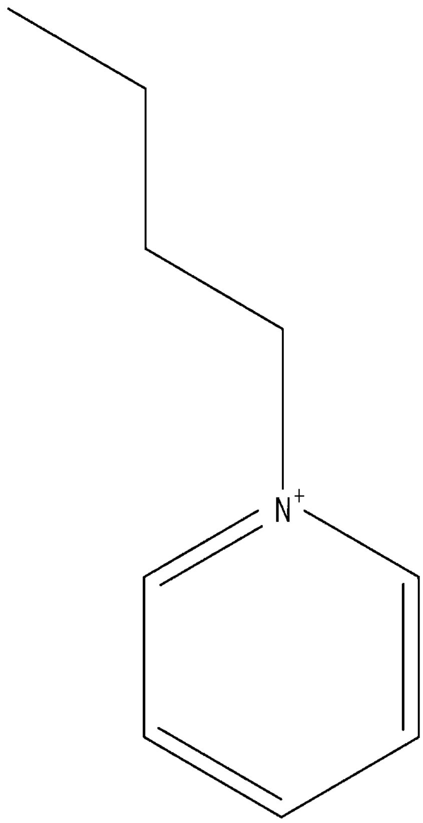

The compound represented by Formula M-4 above may be at least one compound selected from the group consisting of compounds represented by Formula M-4-1 to Formula M-4-17 below.

[Formula M-4-1]

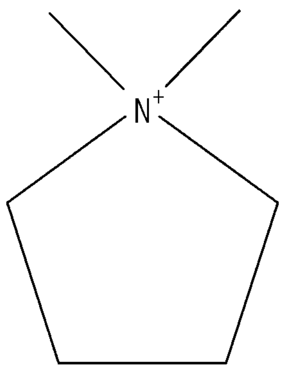

[Formula M-4-2]

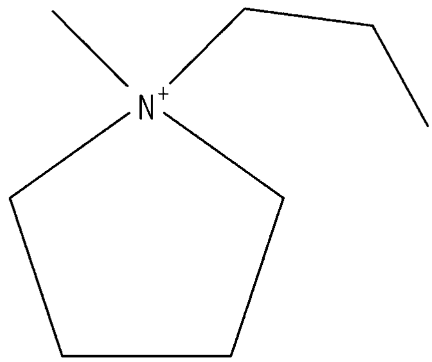

[Formula M-4-3]

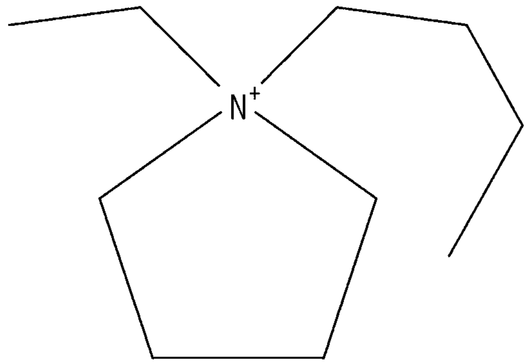

[Formula M-4-4]

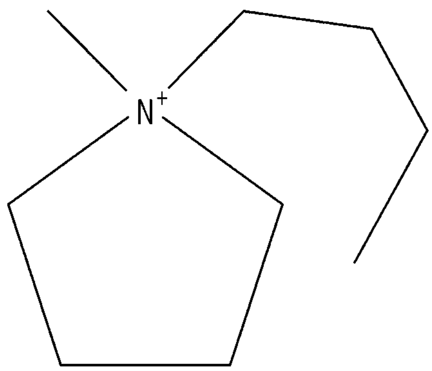

[Formula M-4-5]

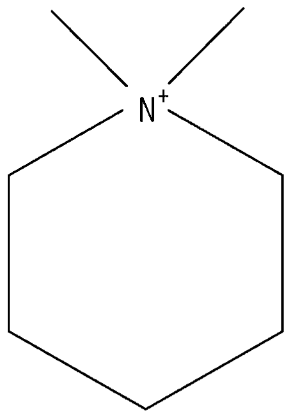

[Formula M-4-6]

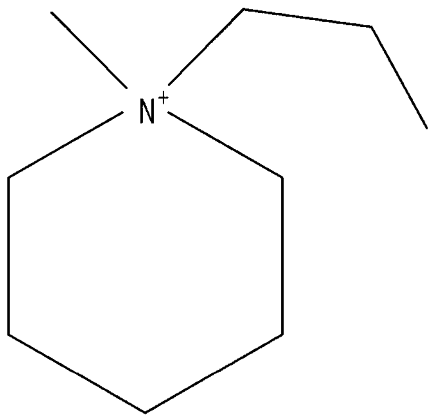

[Formula M-4-7]

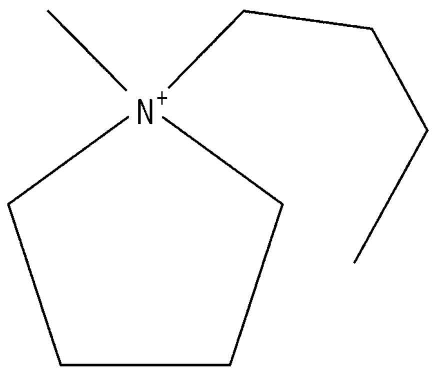

[Formula M-4-8]

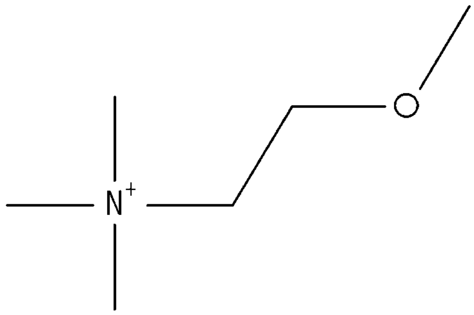

[Formula M-4-9]

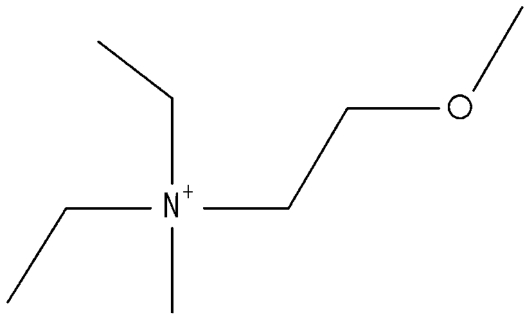

[Formula M-4-10]

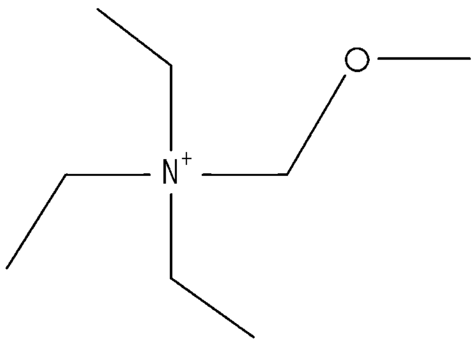

[Formula M-4-11]

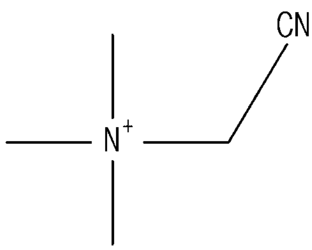

[Formula M-4-12]

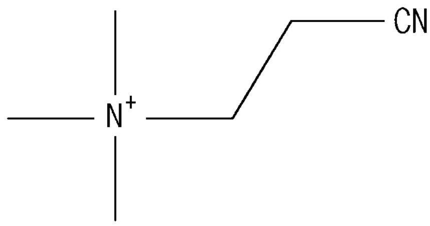

[Formula M-4-13]

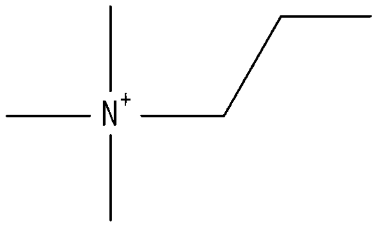

[Formula M-4-14]

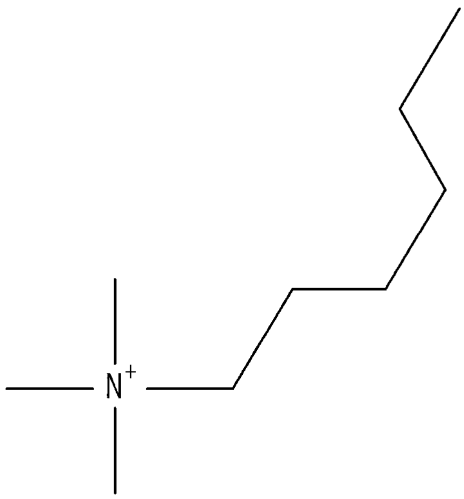

[Formula M-4-15]

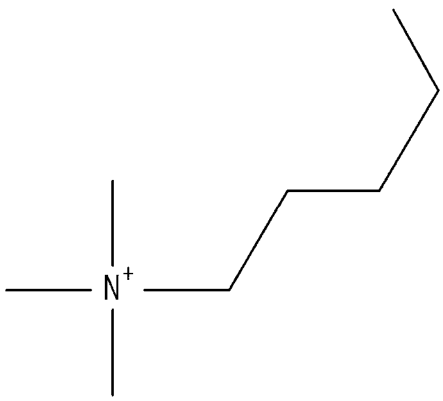

[Formula M-4-16]

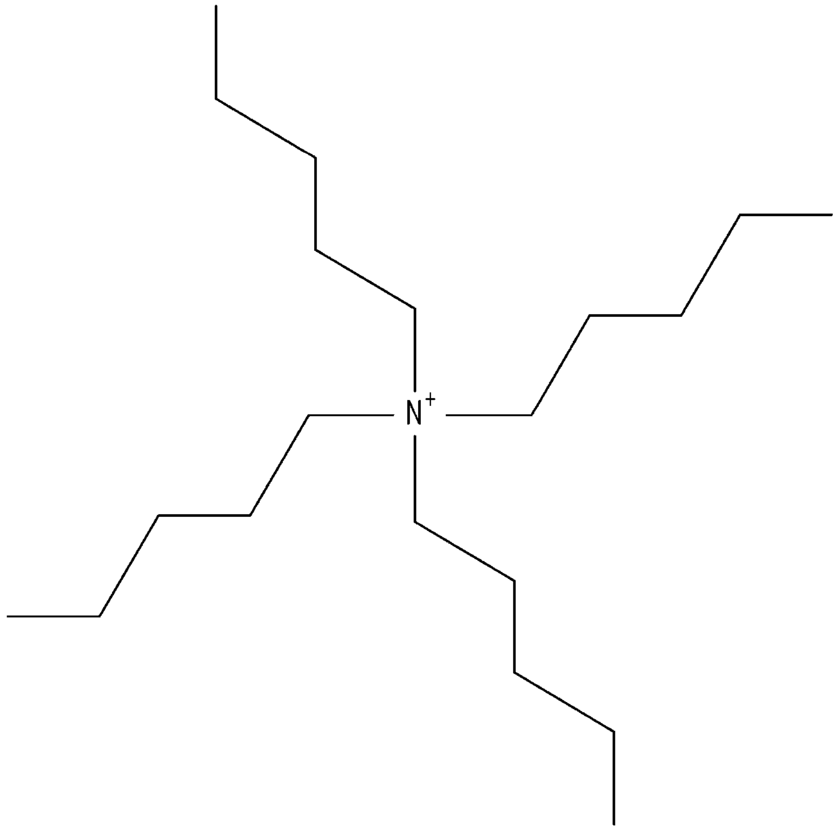

[Formula M-4-17]

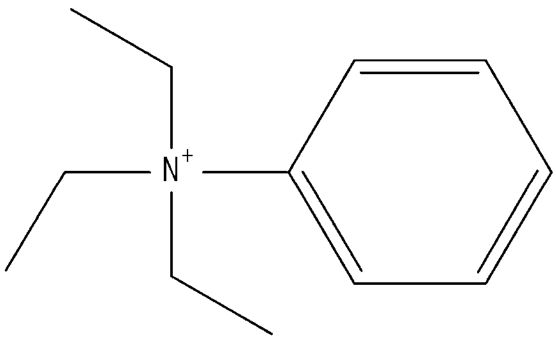

The compound represented by Formula M-5 above may be at least one compound selected from the group consisting of compounds represented by Formula M-5-1 to Formula M-5-14 below.

[Formula M-5-1]

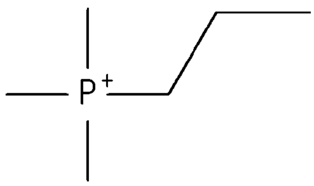

[Formula M-5-2]

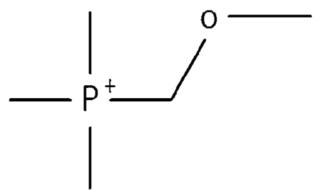

[Formula M-5-3]

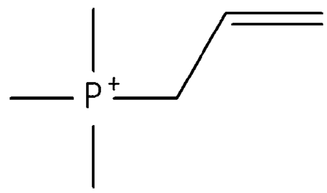

[Formula M-5-4]

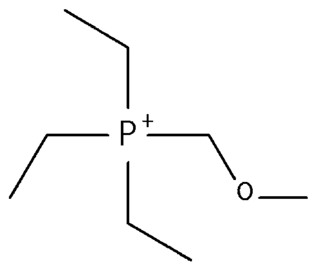

[Formula M-5-5]

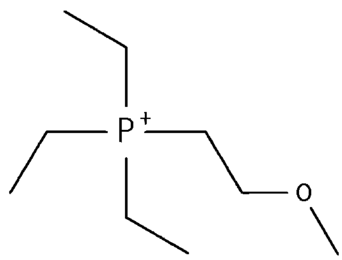

[Formula M-5-6]

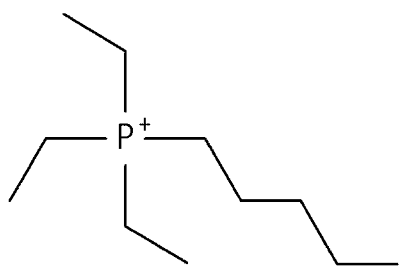

[Formula M-5-7]

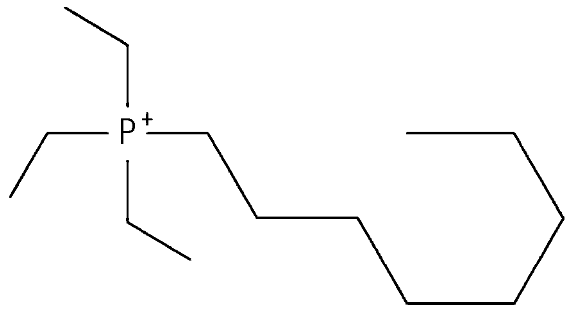

[Formula M-5-8]

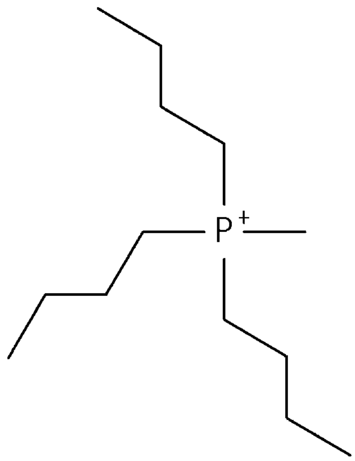

[Formula M-5-9]

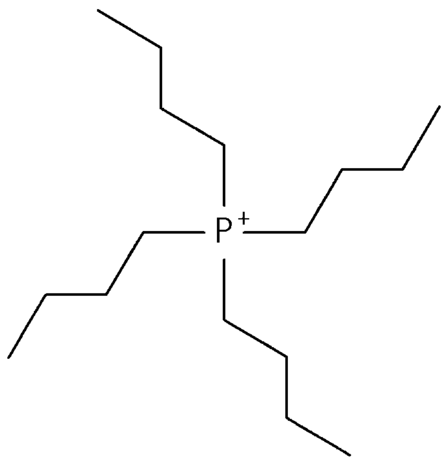

[Formula M-5-10]

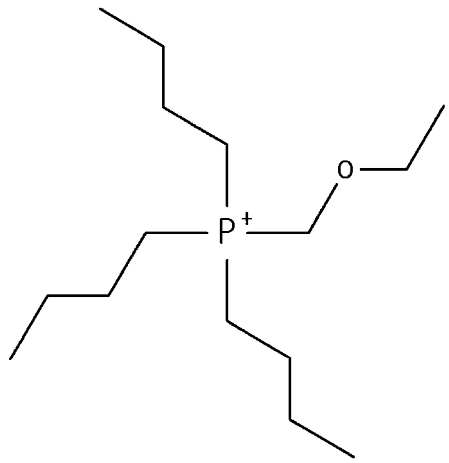

[Formula M-5-11]

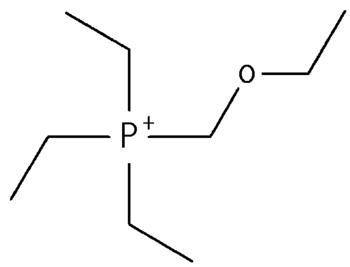

[Formula M-5-12]

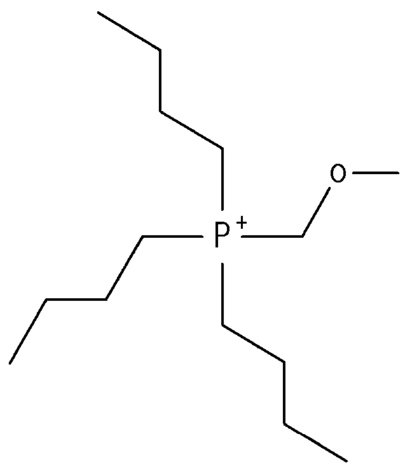

[Formula M-5-13]

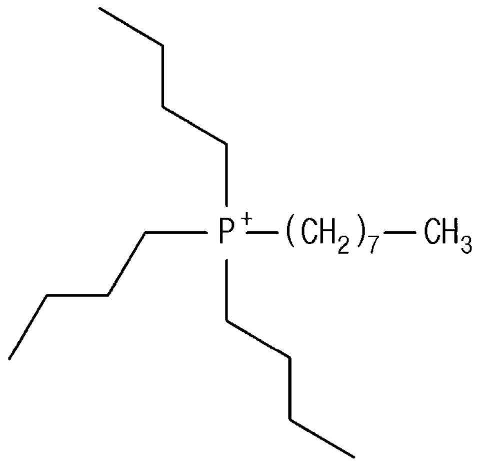

[Formula M-5-14]

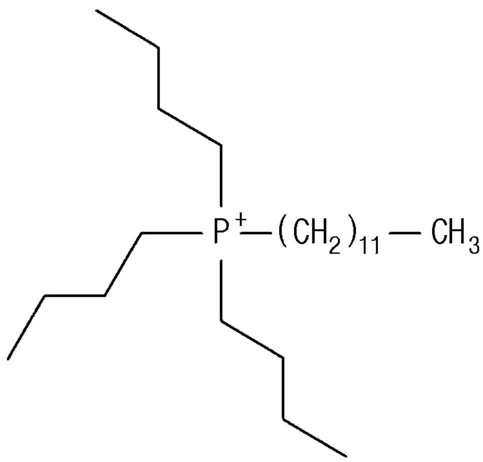

The compound represented by Formula M-6 above may be at least one compound selected from the group consisting of compounds represented by Formula M-6-1 to Formula M-6-11 below.

[Formula M-6-1]

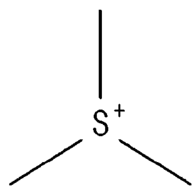

[Formula M-6-2]

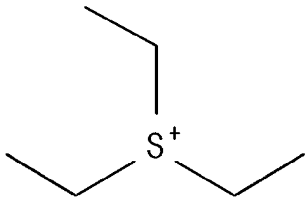

[Formula M-6-3]

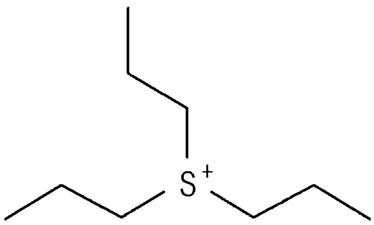

[Formula M-6-4]

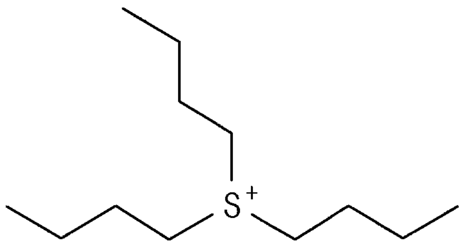

[Formula M-6-5]

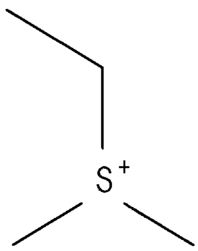

[Formula M-6-6]

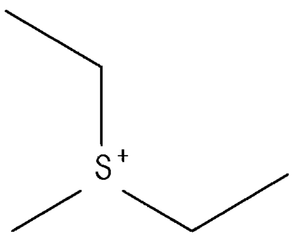

[Formula M-6-7]

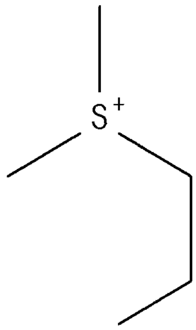

[Formula M-6-8]

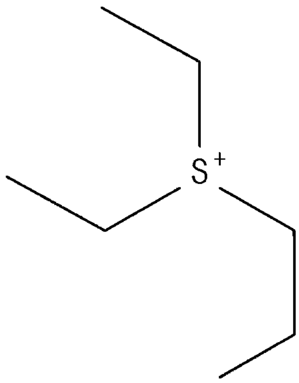

[Formula M-6-9]

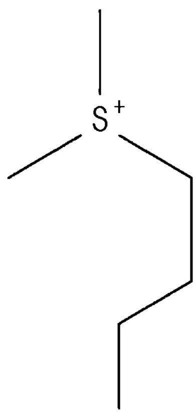

[Formula M-6-10]

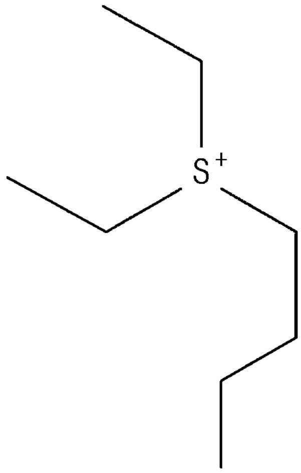

[Formula M-6-11]

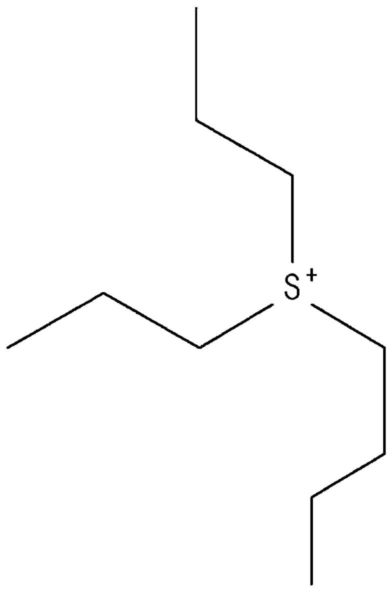

In Formula 1 above, a is the valence of M when M is a metal cation. For example, a is 1 for Li, which is an alkali metal, and a is 2 for Ca, which is an alkaline earth metal. In a case that M is an organic cation, a is 1. In Formula 1 above, a=b.

For example, the compound represented by Formula 1 may include a compound represented by Formula 1-1 below.

[Formula 1-1]

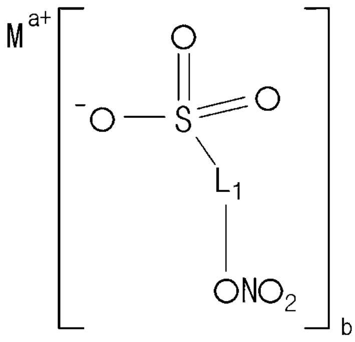

In Formula 1-1 above, each of M, a, b and $L_1$ is as defined in Formula 1 above.

In Formula 1 above, $L_1$ may be an alkyleneoxy group having 1 to 5 carbon atoms. For example, $L_1$ may be $-O-R_{L1}-$, and $R_{L1}$ may be an alkylene group with having 1 to 5 carbon atoms. Here, when $L_1$ may be an alkyleneoxy group (e.g., $-O-R_{L1}-$), oxygen (O) may be bonded to sulfur (S). $L_1$ may specifically be an alkyleneoxy group having 2 to 3 carbon atoms, more specifically may be an ethyleneoxy group or a propyleneoxy group, and even more specifically may be an ethyleneoxy group.

Specifically, the compound represented by Formula 1 above may include a compound represented by Formula 1-A below.

[Formula 1-A]

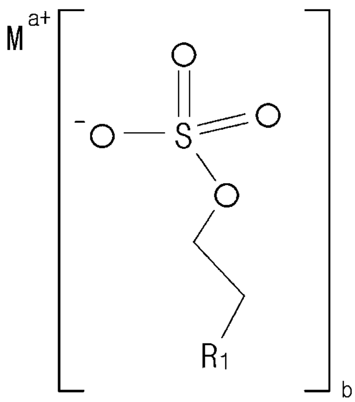

In Formula 1-A above, each of M, a, b and $R_1$ is as defined in Formula 1 above.

More specifically, the compound represented by Formula 1 above may include a compound represented by Formula 1-A-1 below.

[Formula 1-A-1]

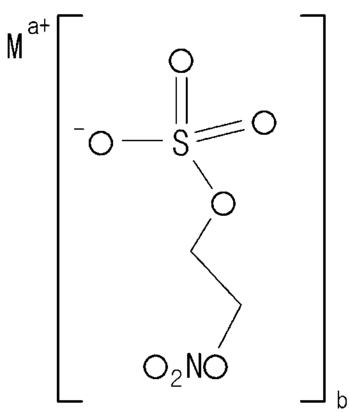

In Formula 1-A-1 above, each of M, a, and b is as defined in Formula 1 above.

Even more specifically, the compound represented by Formula 1 above may include a compound represented by Formula 1-a-1 below.

[Formula 1-a-1]

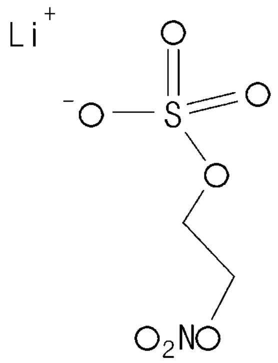

The compound represented by Formula 1 can be formed, for example, by reacting a sulfur oxide (e.g., a cyclic sulfur oxide containing a sulfate group ($-OS(=O)_2-O-$) in the ring) with a metal nitrate (e.g., lithium nitrate, lithium nitrite, etc.), but is not particularly limited thereto. Such a reaction may be performed in advance before the production of the non-aqueous electrolyte, or may be performed by adding the above-described sulfur oxide and metal nitrate to the organic solvent in the production process of the non-aqueous electrolyte.

The presence or absence of the compound represented by Formula 1 can be confirmed by HR-LS/MS(High Resolution Liquid Chromatography-Mass Spectrometry) and/or $^1$H-NMR(1H-Nuclear Magnetic Resonance Spectroscopy), but is not particularly limited thereto.

In the present disclosure, the additive includes at least one of the compound represented by Formula 1, ethylene sulfate, and 1,3-propane sultone. That is, the non-aqueous electrolyte according to the present disclosure may optionally include ethylene sulfate and/or 1,3-propane sultone as an additive, together with the compound represented by Formula 1 above. Or the non-aqueous electrolyte according to the present disclosure may include ethylene sulfate and/or 1,3-propane sultone as an additive, together with the compound represented by Formula 1 above, or may include only the compound represented by Formula 1 above. The ethylene sulfate and/or 1,3-propane sultone may be included in the additive auxiliarily for the formation of a sulfur (S) containing SEI film.

The total content of the compound represented by Formula 1 above, ethylene sulfate, and 1,3-propane sultone is 0.25 wt% to 1.60 wt% based on the total weight of the non-aqueous electrolyte. When the total content of the compound represented by Formula 1 above, ethylene sulfate, and 1,3-propane sultone is less than 0.25 wt% based on the total weight of the non-aqueous electrolyte, there is a concern that the life performance and/or storage performance may deteriorate due to uneven film formation, and the resistance may increase. In addition, when the total content of the compound represented by Formula 1 above, ethylene sulfate, and 1,3-propane sultone exceeds 1.60 wt% based on the total weight of the non-aqueous electrolyte, there is a concern that the electrode film becomes thick and the resistance of the battery increases, which may adversely affect charge transfer phenomena such as deterioration of output performance, hysteresis, and polarization phenomena, and gaseous by-products may be generated at the site where the positive electrode and the negative electrode face each other to interfere with diffusion of lithium ions, causing the electrodeposition of lithium metals to accelerate irreversible capacity loss, etc..

In the present disclosure, the total content of the compound represented by Formula 1 above, ethylene sulfate, and 1,3-propane sultone may mean, for example, the total content of the compound represented by Formula 1 above and 1,3-propane sultone in the non-aqueous electrolyte when the non-aqueous electrolyte does not include ethylene sulfate; it may mean the total content of the compound represented by Formula 1 above and ethylene sulfate in the non-aqueous electrolyte when the non-aqueous electrolyte does not include 1,3-propane sultone; and when the non-aqueous electrolyte does not include 1,3-propane sultone and ethylene sulfate, it may mean the content of the compound represented by Formula 1 above.

Specifically, the total content of the compound represented by Formula 1 above, ethylene sulfate, and 1,3-propane sultone may be 0.75 wt% to 1.60 wt%, may be 0.8 wt% to 1.5 wt%, and may be 0.9 wt% to 1.5 wt% based on the total weight of the non-aqueous electrolyte. When the content is within the above-described range, the uniformity of the electrode film is not only improved, and stable battery performance such as smooth diffusion of lithium ions can be achieved.

If the additive includes ethylene sulfate, the ethylene sulfate may be 1 wt% or less, 0.9 wt% or less, 0.85 wt% or

less, 0.81 wt% or less, 0.7 wt% or less, 0.6 wt% or less or 0.1 wt% or less based on the total weight of the non-aqueous electrolyte. When the additive includes ethylene sulfate, the ethylene sulfate may be greater than 0 wt% based on the total weight of the non-aqueous electrolyte. The additive may not include ethylene sulfate.

If the additive includes 1,3-propane sultone, the 1,3-propane sultone may be 0.5 wt% or less, 0.3 wt% or less, 0.2 wt% or less, or 0.1 wt% or less based on the total weight of the non-aqueous electrolyte. When the additive includes 1,3-propane sultone, the 1,3-propane sultone may be greater than 0 wt% based on the total weight of the non-aqueous electrolyte. The additive may not include 1,3-propane sultone.

In addition, in order to prevent an electrolyte from being decomposed to cause collapse of a negative electrode in a high output environment, or further improve low-temperature high-rate discharge characteristics, high-temperature stability, overcharge protection, and a battery swelling suppression effect at high temperatures, the additive may further include auxiliary additives in the above electrolyte, if necessary.

The auxiliary additive may include at least one selected from the group consisting of a cyclic carbonate-based compound, a nitrile-based compound, a benzene-based compound, a lithium salt-based compound, an amine-based compound, and a silane-based compound.

The cyclic carbonate-based compound may be at least one selected from vinylene carbonate (VC) and vinyl ethylene carbonate (VEC) .

The benzene-based compound may be fluorobenzene. The amine-based compound may be at least one selected from triethanolamine and ethylenediamine. The silane-based compound may be at least one selected from tetravinylsilane, tris(trimethylsilyl) phosphate (TMSPa), and tris(trimethylsilyl)phosphite (TMSPi). The lithium salt-based additive may be at least one selected from lithium bis-(oxalato)borate(LiBOB), lithium difluorooxalatoborate (LiODFB), and lithium difluorophosphate (LiDFP).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

Specifically, the auxiliary additive may include at least one selected from vinylene carbonate and fluoroethylene carbonate, and specifically, may include vinylene carbonate and fluoroethylene carbonate.

Meanwhile, two or more types of the auxiliary additives may be mixed and used, and may be contained in an amount of less than 10 wt%, specifically, 0.01 wt% or more and less than 8.0 wt%, more specifically, 0.05 wt% to 5.0 wt%, and even more specifically, 3 wt% to 5 wt%, based on the total weight of the non-aqueous electrolyte.

In the present disclosure, a peak may exist at 1.76 V to 2.25 V in a V - dQ/dV graph obtained by differentiating a graph of the voltage V and battery capacity Q measured by charging the lithium secondary battery comprising the non-aqueous electrolyte.

In the present specification, the "peak" may be defined as a peak point in any peak region existing in the V-dQ/dV graph, in which an x axis represents a voltage (V) value and a y axis represents a dQ/dV value, specifically, a point having a minimum dQ/dV value in the peak region. More specifically, any one peak region present in the V-dQ/dV graph may mean a voltage region in which the reduction reaction of a specific component present in the non-aqueous electrolyte occurs, and it may be understood that the reduction reaction of the specific component starts at a point at which the peak region starts (a minimum voltage point of the peak region), the reduction reaction of the specific component occurs at a maximum at a peak point of the peak region, and the reduction reaction of the specific component ends at a point at which the peak area ends (a maximum voltage point of the peak region). The area of the peak region may denote an amount of the reduction reaction of a specific component, and the width of the peak region may denote a reduction reaction rate of the specific component.

The peak present at 1.76 V to 2.25 V in the V-dQ/dV graph may be derived from the reduction reaction of the compound represented by Formula 1 above. In the V-dQ/dV graph, a peak present at 1.76 V to 2.25 V may be distinguished from a peak present at 1.0 V to 1.75 V derived by the reduction reaction of a compound which does not contain a sulfur-containing functional group in the structure such as lithium nitrate; and a peak present at 0.7 V to 1.25 V derived by the reduction reaction of a cyclic sulfur oxide such as ethylene sulfate and 1,3-propane sultone.

In deriving the V-dQ/dV graph, the lithium secondary battery may be in a half-cell form. Specifically, the lithium secondary battery includes a positive electrode (or may be represented as a first electrode), a negative electrode (or may be represented as a second electrode), a separator and a non-aqueous electrolyte, wherein the positive electrode includes a lithium metal and the negative electrode includes a negative electrode active material.

Specifically, the positive electrode may include a lithium metal. Specifically, the positive electrode may consist of a lithium metal. The positive electrode may be in a sheet form.

In the negative electrode above, the V - dQ/dV graph is to evaluate the reduction performance of the non-aqueous electrolyte compared to the lithium metal, and there is no particular limitation on the type of the negative electrode active material. The negative electrode active material is a material capable of reversibly intercalating and deintercalating lithium ions, and may include at least one selected from the group consisting of a carbon-based active material, a (semi) metallic active material, and a lithium metal, specifically may include at least one selected from a carbon-based active material and

a (semi) metallic active material, and more specifically, may include a carbon-based active material. The carbon-based active material may specifically include graphite, and the graphite may be artificial graphite or natural graphite. More specifically, the negative electrode is subject to the description of the negative electrode of a lithium secondary battery described below. Specifically, the descriptions of the negative electrode current collector, negative electrode active material, negative electrode active material layer, negative electrode active material, and optionally included additional components such as a binder and a conductive material may be applied as is to the negative electrode.

In addition to the above description, the constitutions included in the lithium secondary battery for deriving the V - dQ/dV graph may be the same as those described for the lithium secondary battery described in the present disclosure.

In deriving the V - dQ/dV graph, the charging process of the lithium secondary battery performed may refer to the activation process (formation) of the lithium secondary battery. That is, in deriving the V - dQ/dV graph, the lithium secondary battery used may be an uncharged lithium secondary battery.

The charging conditions of the lithium secondary battery are not particularly limited. For example, the lithium secondary battery may be charged in constant current/constant voltage (CC/CV) mode, and for example, may be charged in constant current/constant voltage (CC/CV) mode with a cut off at 0.05C and 0.05V. During the charging of the lithium secondary battery, it can be charged at a rate of 0.05C to 1C, specifically 0.1C to 0.5C. During the charging of the lithium secondary battery, the SOC of the lithium secondary battery may be charged from 40% to 100%, specifically, the SOC can be charged from 70% up to 100%, and more specifically, the SOC can be charged up to 100%.

In the V - dQ/dV graph obtained by differentiating the graph of voltage V and battery capacity Q measured by charging the lithium secondary battery, a peak may exist at 1.76 V to 2.25 V, specifically at 1.8 V to 2.2 V, and more specifically at 2.0 V to 2.1 V.

**Lithium secondary battery**

In addition, the present disclosure provides a lithium secondary battery comprising the above-mentioned non-aqueous electrolyte.

Specifically, the lithium secondary battery according to the present disclosure includes a positive electrode, a negative electrode facing the positive electrode, a separator disposed between the negative electrode and the positive electrode, and the above-described non-aqueous electrolyte. The non-aqueous electrolyte may be the non-aqueous electrolyte described above.

After an electrode assembly, in which the positive electrode, the negative electrode facing the positive electrode, and separator interposed between the positive electrode and the negative electrode are included, is accommodated in a battery case, the lithium secondary battery may be prepared by injecting the non-aqueous electrolyte thereto.

Since the non-aqueous electrolyte has been described above, the negative electrode, positive electrode, and separator will be described below.

(1) Positive Electrode

The positive electrode may include a positive electrode active material.

The positive electrode active material is a compound capable of reversibly intercalation and deintercalation, is not particularly limited as long as it is a positive electrode active material used in the art, and specifically may include a lithium metal composite oxide. More specifically, the lithium metal composite oxide may be a layered compound such as lithium cobalt oxide ($LiCoO_2$), lithium nickel oxide ($LiNiO_2$), or a compound substituted with one or more transition metals; a lithium iron oxide such as $LiFe_3O_4$; a lithium iron phosphate such as $LiFePO_4$; a lithium manganese oxide such as $Li_{1+c1}Mn_{2-c1}O_4$ ($0 \leq c1 \leq 0.33$), $LiMnO_3$ $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni-site type lithium nickel oxide represented by $LiNi_{1-c2}M_{c2}O_2$ (wherein M is at least any one selected from the group consisting of Co, Mn, Al, Cu, Fe, Mg, B and Ga, and satisfies $0.01 \leq c2 \leq 0.3$); a lithium manganese composite oxide represented by $LiMn_{2-c3}M_{c3}O_2$ (wherein M is at least any one selected from the group consisting of Co, Ni, Fe, Cr, Zn and Ta, and satisfies $0.01 \leq c3 \leq 0.1$) or $Li_2Mn_3MO_8$ (wherein M is at least any one selected from the group consisting of Fe, Co, Ni, Cu and Zn.), etc., but is not limited thereto. The positive electrode may be a Li-metal positive electrode.

More specifically, the positive electrode active material may include at least one selected from the group consisting of a lithium cobalt oxide ($LiCoO_2$), a lithium nickel cobalt manganese oxide, a perlithium manganese-rich oxide, and lithium iron phosphate. Even more specifically, the positive electrode active material may include lithium iron phosphate.

The lithium nickel cobalt manganese oxide may be represented by Formula P-1 below.

[Formula P-1] $Li_{1+x}(Ni_aCo_bMn_cM_d)O_2$

In Formula P-1 above, M is one or more selected from W, Cu, Fe, V, Cr, Ti, Zr, Zn, Al, In, Ta, Y, La, Sr, Ga, Sc, Gd, Sm, Ca, Ce, Nb, Mg, B and Mo , and 1+x, a, b, c and d are each independent atomic fractions of elements, wherein $0 \le x \le 0.2$, $0.50 \le a < 1$, $0 < b \le 0.25$, $0 < c \le 0.25$, $0 \le d \le 0.1$, $a+b+c+d=1$. Preferably, a, b, c and d may be $0.70 \le a \le 0.95$, $0.025 \le b \le 0.20$, $0.025 \le c \le 0.20$, and $0 \le d \le 0.05$, respectively. Preferably, a, b, c and d may be $0.80 \le a \le 0.95$, $0.025 \le b \le 0.15$, $0.025 \le c \le 0.15$, and $0 \le d \le 0.05$, respectively. Preferably, a, b, c and d may be $0.85 \le a \le 0.90$, $0.05 \le b \le 0.10$, $0.05 \le c \le 0.10$, and $0 \le d \le 0.03$, respectively.

The perlithium manganese-rich oxide may include a compound represented by Formula P-2 below.

[Formula P-2] $Li_{1+s}[Ni_tCo_uMn_vM^1_w]O_{2+z}$

In Formula P-2 above, $M^1$ is one or more selected from W, Cu, Fe, V, Cr, Ti, Zr, Zn, Al, In, Ta, Y, La, Sr, Ga, Sc, Gd, Sm, Ca, Ce, Nb, Mg, B and Mo, wherein $0.05 \le s \le 1$, $0 \le t \le 0.5$, $0 \le u \le 0.3$, $0.5 \le v < 1.0$, $0 \le w \le 0.2$, $0 \le z \le 1$. Preferably, in Formula B above, it may be $0.05 \le s \le 1.0$, $0.1 \le t \le 0.5$, $0 \le u \le 0.1$, $0.5 \le v < 1.0$, $0 \le w \le 0.2$, $0 \le z \le 1$. More preferably, in Formula P-2 above, it may be $0.10 \le s \le 0.50$, $0.1 \le t \le 0.5$, $0 \le u \le 0.1$, $0.6 \le v < 1.0$, $0 \le w \le 0.1$, $0 \le z \le 0.50$.

The lithium iron phosphate may include a compound represented by Formula P-3 below.

[Formula P-3] $Li_{1+e}Fe_{1-g}M^2_g(PO_{4-f})X_f$

In Formula P-3 above, $M^2$ is one or more elements selected from Co, Ni, Mn, Al, Mg, Ti and V, X is F, S, or N, and $0 \le g \le 0.5$; $-0.5 \le e \le +0.5$; $0 \le f \le 0.1$. Formula P-3 above may be specifically represented as $LiFePO_4$ (g=0, e=0, and f=0).

The positive electrode active material may be in a particle form. Specifically, the average particle diameter ($D_{50}$) of the positive electrode active material may be in the range of 1μm to 30μm.

The positive electrode active material may be included in an amount of 70 wt% to 99 wt%, specifically 80 wt% to 98 wt% in the positive electrode active material layer in consideration of enhancing its capacity.

The positive electrode may include a positive electrode current collector and a positive electrode active material layer disposed on at least one surface of the positive electrode current collector. Here, the positive electrode active material layer may include the above-described positive electrode active material.

The positive electrode current collector generally has a thickness of 3 to 500 μm.

Microscopic irregularities may be formed on the surface of the positive electrode current collector to improve the adhesion of the positive electrode active material. For example, the positive electrode current collector may be used in various shapes such as a film, a sheet, a foil, a net, a porous body, a foam body, a non-woven fabric body, and the like.

The positive electrode active material layer may be disposed on at least one surface of the positive electrode current collector. Specifically, the positive electrode active material layer may be disposed on one or both surfaces of the positive electrode current collector.

The positive electrode active material may be included in an amount of 80 wt % to 99 wt % in the positive electrode active material layer in consideration of the sufficient capacity of the positive electrode active material.

The positive electrode active material layer may further include a binder and/or a conductive material together with the above-described positive electrode active material.

The binder is a component which assists in the cohesion of an active material, a conductive material, and the like and the cohesion to a current collector, and specifically, may include at least one selected from polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyvinylidene fluoride-hexafluoropropylene, polyethylene, polypropylene, an ethylenepropylene-diene terpolymer (EPDM), a sulfonated EPDM, styrenebutadiene rubber, and fluorine rubber, and preferably may include polyvinylidene fluoride.

The binder may be included in an amount of 1 wt% to 20 wt%, preferably 1.2 wt% to 10 wt% in the positive electrode active material layer in terms of sufficiently securing a cohesive force between components such as the positive electrode active material.

The conductive material can be used to assist and improve the conductivity of the secondary battery, and is not particularly limited as long as it has conductivity without causing chemical changes. Specifically, the positive electrode conductive material may include at least one selected from graphite such as natural graphite or artificial graphite; acetylene black, Ketjen black, channel black, furnace black, lamp black, and thermal black; conductive fiber such as carbon fiber and metallic fiber; conductive tubes such as carbon nanotubes; fluoro carbon; metallic powder such as aluminum, and nickel powder; conductive whiskers such as zinc oxide and potassium titanate; conductive metal oxide such as titanium oxide; and polyphenylene derivatives, and preferably, the conductive material may include carbon nanotubes in terms of improving conductivity.

The conductive material may be included in an amount of 1 wt% to 20 wt%, preferably 1.2 wt% to 10 wt% in the positive electrode active material layer in terms of sufficiently securing electric conductivity.

The positive electrode active material layer may have a thickness of 5 μm to 500 μm, preferably 20 μm to 200 μm.

The positive electrode may be manufactured by coating the positive electrode current collector with a positive electrode slurry including a positive electrode active material and optionally a binder, a conductive material and a solvent for forming a positive electrode slurry, and then drying and rolling. Alternatively, after a film is prepared by mixing the positive electrode active material and optionally a binder, a conductive material, etc., the film is then laminated on the positive electrode current collector to prepare a positive electrode.

The solvent for forming a positive electrode slurry may include, for example, at least one selected from distilled water, N-methyl pyrrolidone, ethanol, methanol, and isopropyl alcohol, preferably N-methyl pyrrolidone, for the purpose of facilitating the dispersion of the positive electrode active material, the binder and/or the conductive material.

(2) Negative Electrode

Next, a negative electrode will be described.

The negative electrode may include a negative electrode active material.

The negative electrode active material is a material capable of reversibly intercalating and deintercalating lithium ions, and may include at least one selected from the group consisting of a carbon-based active material, a (semi) metallic active material, and a lithium metal, and specifically may include at least one selected from a carbon-based active material and a (semi) metallic active material. More specifically, the negative electrode active material may include at least one selected from a carbon-based active material and a silicon-based active material.

The carbon-based active material may include at least one selected from graphite, hard carbon, soft carbon, carbon black, graphene, and fibrous carbon, and preferably may include graphite. The graphite may be, for example, at least one of artificial graphite and natural graphite.

The average particle diameter ($D_{50}$) of the carbon-based active material may be in the range of 10 μm to 30 μm, and preferably 15 μm to 25 μm in terms of ensuring the structural stability during charging and discharging and reducing side reactions with an electrolyte solution.

Specifically, the (semi) metallic active material may include at least one selected from Cu, Ni, Na, K, Rb, Cs, Fr, Be, Mg, Ca, Fe, Sr, Si, Sb, Pb, In, Zn, Ba, Ra, Ge, Al, V, Ti, and Sn; an alloy of lithium and the (semi) metal selected from Cu, Ni, Na, K, Rb, Cs, Fr, Be, Mg, Ca, Fe, Sr, Si, Sb, Pb, In, Zn, Ba, Ra, Ge, Al, V, Ti, and Sn; an oxide of at least one (semi) metal selected from Cu, Ni, Na, K, Rb, Cs, Fr, Be, Mg, Ca, Fe, Sr, Si, Sb, Pb, In, Zn, Ba, Ra, Ge, Al, V, Ti, and Sn; lithium titanium oxide (LTO); lithium vanadium oxide; etc.

More specifically, the (semi) metallic active material may include a silicon-based active material.

The silicon-based active material may include at least one selected from the compound represented by $SiO_x$ ($0 \leq x < 2$) and a silicon-carbon composite. Since $SiO_2$ cannot store lithium as it does not react with lithium ions, it is preferable that x is within the above range. More preferably, the silicon-based active material may be SiO.

The average particle size ($D_{50}$) of the silicon-based active material may be 1μm to 30μm, preferably 2μm to 15μm in terms of ensuring the structural stability during charging and discharging and reducing side reactions with an electrolyte solution.

In addition, the negative electrode active material may include at least one selected from a carbon-based active material and a silicon-based active material.

For example, the negative electrode of the present disclosure may include the carbon-based active material and silicon-based active material. Here, the weight ratio of the silicon-based active material and the carbon-based active material may be 1:99 to 30:70, and specifically 3:97 to 15:85. In a case in which the mixing ratio of the silicon-based active material to the carbon-based active material satisfies the above range, since the volume expansion of the silicon-based active material is suppressed while capacity characteristics are improved, excellent cycle performance may be secured.

The negative electrode may include a negative electrode current collector and a negative electrode active material layer disposed on at least one surface of the negative electrode current collector. The negative electrode active material may be included in the negative electrode active material layer.

The negative electrode current collector is not particularly limited so long as it has a high conductivity without causing adverse chemical changes in the battery. Specifically, copper, stainless steel, aluminum, nickel, titanium, fired carbon, copper or stainless steel that is surface-treated with one of carbon, nickel, titanium, silver, and the like, and an aluminum-cadmium alloy may be used as the negative electrode current collector.

The negative electrode current collector generally has a thickness of 3 to 500 μm.

Microscopic irregularities may be formed on the surface of the negative electrode collector to improve the adhesion of the negative electrode active material. For example, the negative electrode current collector may be used in various shapes such as a film, a sheet, a foil, a net, a porous body, a foam body, a non-woven fabric body, and the like.

The negative electrode active material layer may be disposed on at least one surface of the negative electrode current collector. Specifically, the negative electrode active material layer may be disposed on one or both surfaces of the negative electrode current collector.

The negative electrode active material may be included in an amount of 60 wt% to 99 wt% in the negative

electrode active material layer in terms of exhibiting the sufficient capacity in the secondary battery.

The negative electrode active material layer may further include a conductive material and/or a binder together with the above negative electrode active material.

The binder is used to improve battery performance by improving adhesion between the negative electrode active material layer and the negative electrode current collector, and enhancing a cohesive force between the negative electrode active materials.

Specifically, in terms of further improving electrode adhesion and providing sufficient resistance to the volume expansion/contraction of the negative electrode active material, the binder may include at least one selected from the group consisting of styrene butadiene rubber (SBR), nitrile butadiene rubber (NBR), acrylonitrile butadiene rubber, acrylic rubber, butyl rubber, fluoro rubber, polyvinyl alcohol, carboxymethylcellulose(CMC), starch, hydroxypropylcellulose, regenerated cellulose, polyvinyl alcohol (PVA) polyacrylic acid (PAA) polyethylene glycol (PEG), polyacrylonitrile (PAN) polyacryl amide (PAM) polyvinylidene fluoride, polytetrafluoroethylene, and polyvinylidene fluoride-hexafluoropropylene.

The binder may be included in the negative electrode active material layer in an amount of 1 wt% to 30 wt%, and when it is included in the above range, the negative electrode active material can be better bound, thereby minimizing the problem of volume expansion of the active material, and concurrently during the preparation of a slurry for forming the negative electrode active material layer, it can facilitate the dispersion of the binder and improve the coating property and phase stability of the slurry.

The conductive agent can be used to assist and improve the conductivity of the secondary battery, and is not particularly limited as long as it has conductivity without causing chemical changes. Specifically, the conductive material may include at least one selected from the group consisting of graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluoro carbon; metallic powder such as aluminum, and nickel powder; conductive whiskers such as zinc oxide and potassium titanate; conductive metal oxide such as titanium oxide; polyphenylene derivatives, and the like.

The conductive material may be included in the negative electrode active material layer in an amount of 1 wt% to 20 wt%, and when the amount is within the above range, it is preferable in terms of forming an excellent conductive network while alleviating an increase in the resistance due to the binder.

The negative electrode active material layer may have a thickness of 5 $\mu$m to 500 $\mu$m, preferably 5 $\mu$m to 200 $\mu$m.

The negative electrode may be prepared by coating the negative electrode current collector with a negative electrode slurry including a negative electrode active material and optionally a binder, a conductive material and a solvent for forming a negative electrode slurry, and then drying and rolling. Alternatively, after a film is prepared by mixing the negative electrode active material and optionally a binder, a conductive material, etc., the film is then laminated on the negative electrode current collector to prepare a negative electrode.

The solvent for forming a negative electrode slurry may include, for example, at least one selected from distilled water, N-methyl pyrrolidone, ethanol, methanol, and isopropyl alcohol, preferably distilled water, for the purpose of facilitating the dispersion of the negative electrode active material, the binder and/or the conductive material.

(3) Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte due to low resistance to the ion transport of the non-aqueous electrolyte is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, an ethylene/methacrylate copolymer, etc., or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

A shape of the lithium secondary battery of the present disclosure is not particularly limited, but a cylindrical type, a prismatic type, a pouch type, or a coin type may be used.

In addition, the lithium secondary battery of the present disclosure may be suitably used in portable devices, such as mobile phones, notebook computers, and digital cameras, and electric cars such as hybrid electric vehicles (HEVs) and power storage devices (ESS) .

Hereinafter, the present disclosure will be described in more detail according to examples. However, the invention may be embodied in many different forms and should not be construed as being limited to the embodiments set forth herein. Rather, these example embodiments are provided so that this description will be thorough and complete,

and will fully convey the scope of the present disclosure to those skilled in the art.

## Examples and Comparative Examples

### Example 1

(1) Preparation of a compound represented by Formula 1

Ethylene sulfate and $LiNO_3$ were dissolved in an ethyl acetate (EA) solvent at a ratio of 10 wt% to have an equivalent ratio of 1.2:1 and then mixed at room temperature (15-25°C) to perform formation reaction of a compound represented by Formula 1-a-1. The compound represented by Formula 1, which was not dissolved in the ethyl acetate (EA) solvent precipitated in a powder form by the compound formation reaction. The solution after the reaction was filtered to obtain powder. Subsequently, the ethyl acetate solvent remaining in the powder was evaporated to obtain a compound represented by Formula 1-a-1.

The presence of the compound represented by Formula 1-a-1 was confirmed by HR-LC/MS(High Resolution Liquid Chromatography-Mass Spectrometry) and $^1$H-NMR(1H-Nuclear Magnetic Resonance Spectroscopy).

First, the compound (powder) represented by Formula 1-a-1 above was added to an organic solvent in which ethylene carbonate, ethyl methyl carbonate, and dimethyl carbonate were mixed at a volume ratio of 30:50:20, and the mixture was diluted in an acetone D6 solvent to prepare a sample solution. HR-LC/MS and $^1$H-NMR were measured by using the sample solution.

For the HR-LC/MS equipment, Orbitrap IQ-X Tribrid by ThermoFisher was used. As the measurement conditions, CapcellPak C18 was used as a column, acetonitrile and trifluoroacetate (volume ratio 100 : 0.02) were used as an eluent A, distilled water and trifluoroacetate (volume ratio 100 : 0.02) were used as an eluent B; a flow rate was 1mL/min; a UV detector was set at 220 nm, and an electrospray ionization (ESI) anionization mode was used as an ionization mode. For the 1H-NMR equipment, Advance Neo by Bruker was used.

The presence of the compound represented by Formula 1-a-1 was confirmed through FIGS. 1 to 4. Specifically, the XIC (Extracted Ion Chromatogram) for m/z 185.97140 according to FIG. 1 showed a single peak at 1.35 min, confirming that the compound represented by Formula 1-a-1 was present in the sample and was separated on the LC.

In the MS spectrum according to FIG. 2, 185.97140 corresponding to the anion of the compound represented by Formula 1-a-1 was observed, which matched the molecular formula $C_2H_4NO_7S^-$ of the compound represented by Formula 1-a-1.

Additional MS/MS analysis (Tandem MS, double mass spectrometry) according to FIG. 3 detected fragment ions such as m/z 61.98818($O_3N$), and 79.95725($O_3S$), which are consistent with the expected structural decomposition pattern. These results support the presence and structural identity of the compound represented by Formula 1-a-1.

The observed characteristic chemical shifts of 4.76 (t,2) and 4.18 (t,2) in the $^1$H-NMR spectrum according to FIG. 4 support the presence of the compound represented by Formula 1-a-1.

(2) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above, vinylene carbonate (VC), fluoroethylene carbonate (FEC) and 1,3-propane sultone (PS) as additives. The compound represented by Formula 1-a-1 above, vinylene carbonate (VC), fluoroethylene carbonate (FEC) and 1,3-propane sultone (PS) were included in an amount of 0.80 wt%, 3.00 wt%, 1.00 wt% and 0.10 wt%, respectively in the non-aqueous electrolyte.

(3) Preparation of a lithium secondary battery

(Positive Electrode Preparation)

A positive electrode active material ($LiFePO_4$), a conductive material (carbon nanotube, CNT) and a binder (polytetrafluoroethylene, PTFE) were kneaded at a weight ratio of 96.0: 0.5: 3.5 to prepare a positive electrode active material slurry (solid content 100 wt%). A 13 μm thick positive electrode collector (Al thin film) was coated with the positive electrode active material slurry, dried, and roll-pressed to prepare a positive electrode.

(Negative Electrode Preparation)

A negative electrode active material (a mixture of artificial graphite and natural graphite in a weight ratio of 80:20),

styrenebutadiene rubber and carboxymethyl cellulose as binders, and carbon black as a conductive material was added to distilled water, which was a solvent, in a weight ratio of 96.7: 2.8: 0.5 to prepare a negative electrode active material slurry (solid content: 53 wt%). A 6 μm thick negative electrode collector (Cu thin film) was coated with the negative electrode active material slurry, dried, and roll-pressed to prepare a negative electrode.

**Example 2**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), vinylene carbonate (VC), fluoroethylene carbonate (FEC), ethylene sulfate (Esa), and 1,3-propane sultone (PS) as additives. The compound represented by Formula 1-a-1 above, vinylene carbonate (VC), fluoroethylene carbonate (FEC), ethylene sulfate (Esa), and 1,3-propane sultone (PS) were included in an amount of 0.30 wt%, 3.00 wt%, 1.00 wt%, 0.80 wt% and 0.20 wt%, respectively in the non-aqueous electrolyte.

(2) Preparation of a lithium secondary battery

A lithium secondary battery was prepared in the same manner as in Example 1 except that the non-aqueous electrolyte was used.

**Example 3**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), vinylene carbonate (VC), and fluoroethylene carbonate (FEC) as additives. The compound represented by Formula 1-a-1 above, vinylene carbonate (VC), and fluoroethylene carbonate (FEC) were included in an amount of 1.50 wt%, 3.00 wt%, and 1.00 wt%, respectively in the non-aqueous electrolyte.

(2) Preparation of a lithium secondary battery

A lithium secondary battery was prepared in the same manner as in Example 1 except that the non-aqueous electrolyte was used.

**Comparative Example 1**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding vinylene carbonate (VC), fluoroethylene carbonate (FEC) and 1,3-propane sultone (PS) as additives. Vinylene carbonate (VC), fluoroethylene carbonate (FEC) and 1,3-propane sultone (PS) were included in an amount of 3.00 wt%,1.00 wt% and 0.2 wt%, respectively in the non-aqueous electrolyte.

(2) Preparation of a lithium secondary battery

A lithium secondary battery was prepared in the same manner as in Example 1 except that the non-aqueous electrolyte was used.

**Comparative Example 2**

(1) Preparation of Non-Aqueous Electrolyte

A non-aqueous electrolyte was prepared by dissolving $LiPF_6$ in an organic solvent, in which ethylene carbonate

(EC), ethylmethyl carbonate (EMC), and dimethyl carbonate (DMC) were mixed at a volume ratio of 30:50:20, such that the $LiPF_6$ was 1.0M, and then adding $LiNO_3$, vinylene carbonate (VC), and fluoroethylene carbonate (FEC). $LiNO_3$, vinylene carbonate (VC), and fluoroethylene carbonate (FEC) were included in an amount of 0.25 wt%, 3.00 wt% and 1.00 wt%, respectively in the non-aqueous electrolyte.

(2) Preparation of a lithium secondary battery

A lithium secondary battery was prepared in the same manner as in Example 1 except that the non-aqueous electrolyte was used.

**Comparative Example 3**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding ethylene sulfate (Esa), vinylene carbonate (VC), and fluoroethylene carbonate (FEC). Ethylene sulfate (Esa), vinylene carbonate (VC), and fluoroethylene carbonate (FEC) were included in an amount of 0.50 wt%, 3.00 wt% and 1.00 wt%, respectively in the non-aqueous electrolyte.

(2) Preparation of a lithium secondary battery

A lithium secondary battery was prepared in the same manner as in Example 1 except that the non-aqueous electrolyte was used.

**Comparative Example 4**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), ethylene sulfate (Esa), vinylene carbonate (VC), fluoroethylene carbonate (FEC), and 1,3-propane sultone (PS) as additives. The compound represented by Formula 1-a-1 above, ethylene sulfate (Esa), vinylene carbonate (VC), fluoroethylene carbonate (FEC), and 1,3-propane sultone (PS) were included in an amount of 0.20 wt%, 0.40 wt%, 3.00 wt%, 1.00 wt% and 0.20 wt%, respectively.

(2) Preparation of a lithium secondary battery

A lithium secondary battery was prepared in the same manner as in Example 1 except that the non-aqueous electrolyte was used.

**Comparative Example 5**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), ethylene sulfate (Esa), vinylene carbonate (VC), and fluoroethylene carbonate (FEC) as additives. The compound represented by Formula 1-a-1 above, ethylene sulfate (Esa), vinylene carbonate (VC), and fluoroethylene carbonate (FEC) were included in an amount of 1.70 wt%, 0.70 wt%, 3.00 wt% and 1.00 wt%, respectively.

**Comparative Example 6**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), ethylene sulfate (Esa), vinylene carbonate (VC), and fluoroethylene carbonate (FEC) as additives. The compound represented by Formula 1-a-1 above, ethylene sulfate (Esa), vinylene carbonate (VC), and fluoroethylene carbonate (FEC) were included in an amount of 1.40 wt%, 0.30 wt%, 3.00 wt% and 1.00 wt%, respectively.

(2) Preparation of a lithium secondary battery

A lithium secondary battery was prepared in the same manner as in Example 1 except that the non-aqueous electrolyte was used.

**Comparative Example 7**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), ethylene sulfate (Esa), vinylene carbonate (VC), fluoroethylene carbonate (FEC), and 1,3-propane sultone (PS) as additives. The compound represented by Formula 1-a-1 above, ethylene sulfate (Esa), vinylene carbonate (VC), fluoroethylene carbonate (FEC), and 1,3-propane sultone (PS) were included in an amount of 1.40 wt%, 0.10 wt%, 3.00 wt%, 1.00 wt% and 0.20 wt%, respectively.

(2) Preparation of a lithium secondary battery

A lithium secondary battery was prepared in the same manner as in Example 1 except that the non-aqueous electrolyte was used.

**Comparative Example 8**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), vinylene carbonate (VC), fluoroethylene carbonate (FEC), and 1,3-propane sultone (PS) as additives. The compound represented by Formula 1-a-1 above, vinylene carbonate (VC), fluoroethylene carbonate (FEC) and 1,3-propane sultone (PS) were included in an amount of 0.30 wt%, 3.00 wt%, 1.00 wt% and 1.50 wt%, respectively in the non-aqueous electrolyte.

(2) Preparation of a lithium secondary battery

A lithium secondary battery was prepared in the same manner as in Example 1 except that the non-aqueous electrolyte was used.

**Comparative Example 9**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), ethylene sulfate (Esa), vinylene carbonate (VC), and fluoroethylene carbonate (FEC) as additives. The compound represented by Formula 1-a-1 above, ethylene sulfate (Esa), vinylene carbonate (VC),

and fluoroethylene carbonate (FEC) were included in an amount of 0.30 wt%, 1.50 wt%, 3.00 wt%, and 1.00 wt%, respectively.

(2) Preparation of a lithium secondary battery

A lithium secondary battery was prepared in the same manner as in Example 1 except that the non-aqueous electrolyte was used.

**Comparative Example 10**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), vinylene carbonate (VC), fluoroethylene carbonate (FEC), and 1,3-propane sultone (PS) as additives. The compound represented by Formula 1-a-1 above, vinylene carbonate (VC), fluoroethylene carbonate (FEC) and 1,3-propane sultone (PS) were included in an amount of 0.70 wt%, 3.00 wt%, 1.00 wt% and 1.00 wt%, respectively.

(2) Preparation of a lithium secondary battery

A lithium secondary battery was prepared in the same manner as in Example 1 except that the non-aqueous electrolyte was used.

**Comparative Example 11**

(1) Preparation of Non-Aqueous Electrolyte

A non-aqueous electrolyte was prepared by dissolving $LiPF_6$ in an organic solvent, in which ethylene carbonate (EC), ethylmethyl carbonate (EMC), and dimethyl carbonate (DMC) were mixed at a volume ratio of 30:50:20, such that the $LiPF_6$ was 1.0M, and then adding a compound represented by Formula 1-a-1 above (prepared according to the preparation method of Example 1), ethylene sulfate (Esa), vinylene carbonate (VC), and fluoroethylene carbonate (FEC) as additives. The compound represented by Formula 1-a-1 above, ethylene sulfate (Esa), vinylene carbonate (VC), and fluoroethylene carbonate (FEC) were included in an amount of 0.70 wt%, 1.00 wt%, 3.00 wt%, and 1.00 wt%, respectively.

(2) Preparation of a lithium secondary battery

A lithium secondary battery was prepared in the same manner as in Example 1 except that the non-aqueous electrolyte was used.

[Table 1]

| | Additives (wt%, based on the weight of non-aqueous electrolyte) | | | | | | Total weight of the compound represent ed by Formula 1-a-1, ESa, and PS |
|---|---|---|---|---|---|---|---|
| | Formula 1-a-1 | ESa | $LiNO_3$ | VC | FEC | PS | |
| Example 1 | 0.80 | - | - | 3.00 | 1.00 | 0.10 | 0.90 |
| Example 2 | 0.30 | 0.80 | - | 3.00 | 1.00 | 0.20 | 1.30 |
| Example 3 | 1.50 | - | - | 3.00 | 1.00 | - | 1.50 |
| Comparative Example 1 | - | - | - | 3.00 | 1.00 | 0.20 | 0.20 |
| Comparative Example 2 | - | - | 0.25 | 3.00 | 1.00 | - | 0 |
| Comparative Example 3 | - | 0.50 | - | 3.00 | 1.00 | - | 0.50 |
| Comparative Example 4 | 0.20 | 0.40 | - | 3.00 | 1.00 | 0.20 | 0.80 |

(continued)

| | Additives (wt%, based on the weight of non-aqueous electrolyte) | | | | | | Total weight of the compound represent ed by Formula 1-a-1, ESa, and PS |
|---|---|---|---|---|---|---|---|
| | Formula 1-a-1 | ESa | $LiNO_3$ | VC | FEC | PS | |
| Comparative Example 5 | 1.70 | 0.70 | - | 3.00 | 1.00 | - | 2.40 |
| Comparative Example 6 | 1.40 | 0.30 | - | 3.00 | 1.00 | - | 1. 70 |
| Comparative Example 7 | 1.40 | 0.10 | - | 3.00 | 1.00 | 0.20 | 1.70 |
| Comparative Example 8 | 0.30 | - | - | 3.00 | 1.00 | 1.50 | 1. 80 |
| Comparative Example 9 | 0.30 | 1.50 | - | 3.00 | 1.00 | - | 1. 80 |
| Comparative Example 10 | 0.70 | - | - | 3.00 | 1.00 | 1.00 | 1. 70 |
| Comparative Example 11 | 0.70 | 1.00 | - | 3.00 | 1.00 | - | 1.70 |

**Experimental Examples: Evaluation of high-temperature cycle performance**

The above-prepared lithium secondary batteries of Examples and Comparative Examples were evaluated for high-temperature cycle performance.

Specifically, the lithium secondary batteries of Examples and Comparative Examples were charged at a 0.33C rate to 3.8V under a CC-CV condition at 45°C (0.05C cut-off), and were discharged at a 0.33C rate to 2.5V under a CC condition, which was set as one cycle. The discharge capacity after 1 cycle was measured.

Subsequently, after 300 cycles of charging and discharging were performed under the above-described charging and discharging conditions, the capacity retention rate (%) was measured. The capacity retention rate (%) was calculated according to the following equation. The results are presented in FIG.5 and Table 2 below.

Capacity retention rate(%) = (discharge capacity after 300 cycles/discharge capacity after 1 cycle) $\times$ 100

[Table 2]

| | Capacity Retention Rate (%, 300th Cycle) |
|---|---|
| Example 1 | 91.38 |
| Example 2 | 90.66 |
| Example 3 | 91.02 |
| Comparative Example 1 | 81.39 |
| Comparative Example 2 | 84.58 |
| Comparative Example 3 | 86.97 |
| Comparative Example 4 | 87.06 |
| Comparative Example 5 | 87.79 |
| Comparative Example 6 | 88.06 |
| Comparative Example 7 | 87.77 |
| Comparative Example 8 | 87.69 |
| Comparative Example 9 | 87.30 |
| Comparative Example 10 | 87.49 |
| Comparative Example 11 | 88.53 |

Referring to Table 2 and FIG. 5, it may be confirmed that the lithium secondary batteries of the Examples, in which the compound represented by Formula 1 is included in the above range, and the content ranges of the compound

represented by Formula 1, ethylene sulfate and 1,3-propane sultone are specified, exhibited significantly superior cycle performance compared to the Comparative Examples.

## Claims

**1.** A non-aqueous electrolyte, comprising a lithium salt, an organic solvent and an additive,

wherein the additive includes a compound represented by Formula 1,
the additive includes at least one of the compound represented by Formula 1, ethylene sulfate, and 1,3-propane sultone,
the compound represented by Formula 1 is included in an amount of 0.25 wt% to 1.60 wt% in the non-aqueous electrolyte, and
a total content of the compound represented by Formula 1, ethylene sulfate, and 1,3-propane sultone is 0.25 wt% to 1.60 wt% based on a total weight of the non-aqueous electrolyte:

[Formula 1]

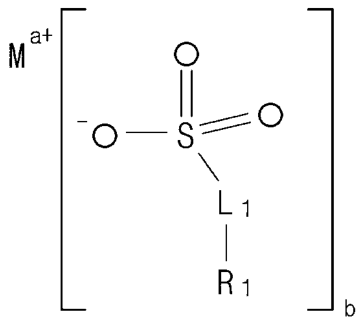

in Formula 1,
$R_1$ is -O-$NO_2$,
$L_1$ is an alkyleneoxy group having 1 to 5 carbon atoms,
M is a metal cation or an organic cation,
a is the valence of M when M is a metal cation, a is 1 when M is an organic cation, and
a=b.

**2.** The non-aqueous electrolyte of claim 1,

wherein M is a metal cation, and
M is any one selected from the group consisting of Li, K, Ca, Mg and Cs.

**3.** The non-aqueous electrolyte of claim 1,

wherein M is an organic cation, and
M is any one selected from a group consisting of compounds represented by Formula M-1 to Formula M-6:

[Formula M-1]

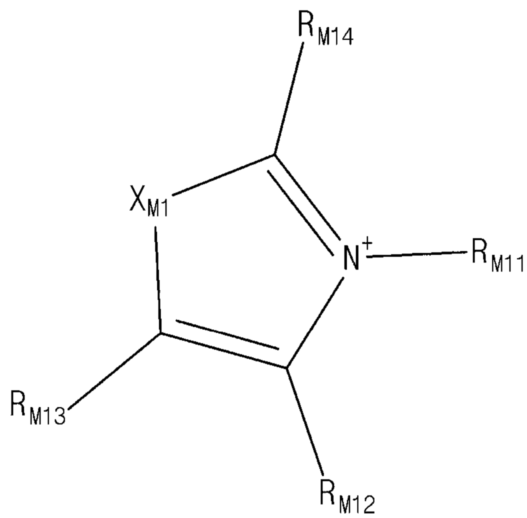

in Formula M-1, $X_{M1}$ is -N($R_{M15}$)- or -S-, and $R_{M11}$, $R_{M12}$, $R_{M13}$, $R_{M14}$ and $R_{M15}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms.

[Formula M-2]

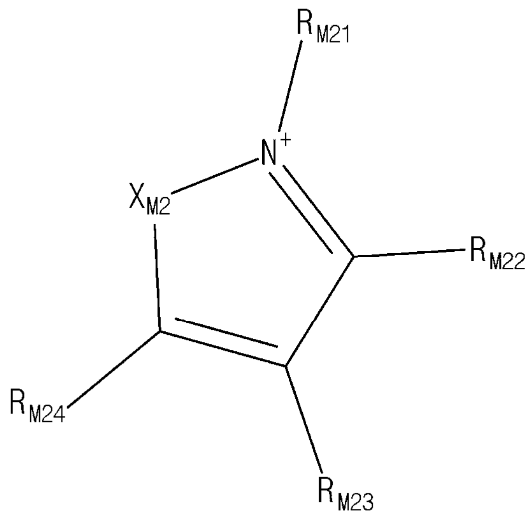

in Formula M-2, $X_{M2}$ is -N($R_{M25}$)- or -S-, and $R_{M21}$, $R_{M22}$, $R_{M23}$, $R_{M24}$ and $R_{M25}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms.

[Formula M-3]

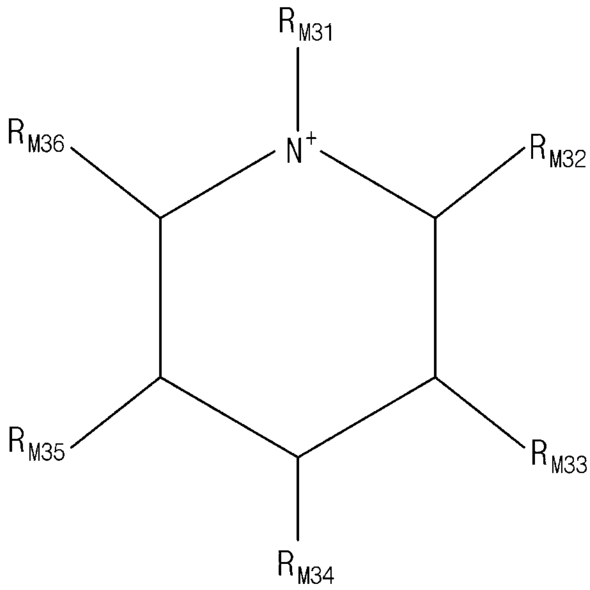

in Formula M-3, $R_{M31}$, $R_{M32}$, $R_{M33}$, $R_{M34}$, $R_{M35}$ and $R_{M36}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms.

[Formula M-4]

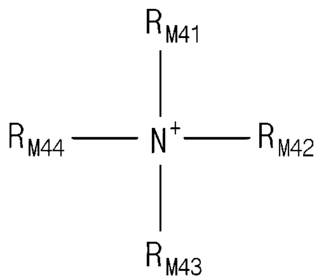

in Formula M-4, $R_{M41}$, $R_{M42}$, $R_{M43}$ and $R_{M44}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 2 to 12 carbon atoms or an alkoxy group having 1 to 12 carbon atoms, and at least two of $R_{M41}$, $R_{M42}$, $R_{M43}$ and $R_{M44}$ are alkyl groups having 1 to 5 carbon atoms, and may be bonded to each other to form an aliphatic hydrocarbon ring.

[Formula M-5]

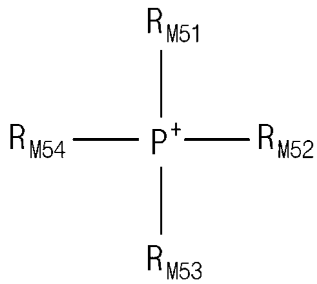

in Formula M-5, $R_{M51}$, $R_{M52}$, $R_{M53}$ and $R_{M54}$ are each independently hydrogen, an alkyl group having 1 to 12

carbon atoms, an alkenyl group having 2 to 12 carbon atoms, an alkynyl group having 2 to 12 carbon atoms, an aryl group having 6 to 12 carbon atoms, a cyanoalkyl group having 2 to 12 carbon atoms, an alkoxyalkyl group having 1 to 12 carbon atoms or an alkoxy group having 1 to 12 carbon atoms, and at least two of $R_{M51}$, $R_{M52}$, $R_{M53}$ and $R_{M54}$ may be bonded to each other to form an aliphatic hydrocarbon ring.

[Formula M-6]

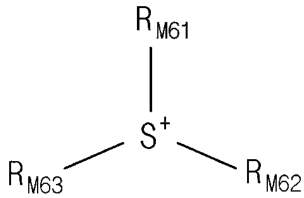

in Formula M-6, $R_{M61}$, $R_{M62}$ and $R_{M63}$ are each independently hydrogen, an alkyl group having 1 to 12 carbon atoms, an alkenyl group having 2 to 12 carbon atoms, an alkynyl group having 2 to 12 carbon atoms, an aryl group having 6 to 12 carbon atoms, a cyanoethyl group having 1 to 12 carbon atoms, an alkoxyalkyl group having 1 to 12 carbon atoms or an alkoxy group having 1 to 12 carbon atoms, and at least two of $R_{M61}$, $R_{M62}$ and $R_{M63}$ may be bonded to each other to form an aliphatic hydrocarbon ring.

**4.** The non-aqueous electrolyte of claim 1,

wherein the compound represented by Formula 1 includes a compound represented by Formula 1-A:

[Formula 1-A]

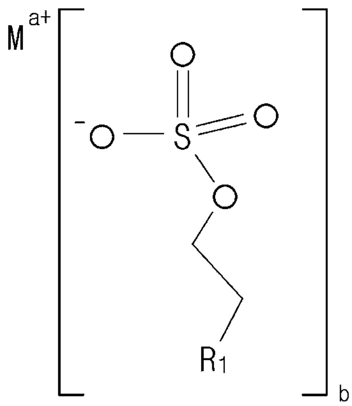

in Formula 1-A, each of M, a, b and $R_1$ is as defined in Formula 1.

**5.** The non-aqueous electrolyte of claim 1,

wherein the compound represented by Formula 1 includes a compound represented by Formula 1-A-1:

[Formula 1-A-1]

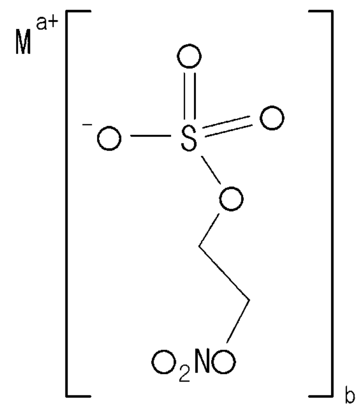

in Formula 1-A-1, each of M, a, and b is as defined in Formula 1.

**6.** The non-aqueous electrolyte of claim 1,
wherein the compound represented by Formula 1 includes a compound represented by Formula 1-a-1:

[Formula 1-a-1]

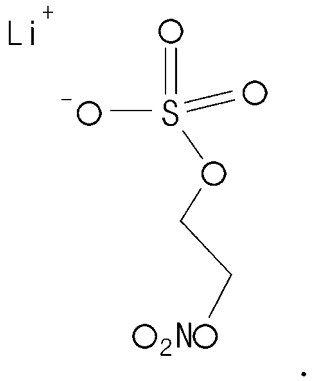

**7.** The non-aqueous electrolyte of claim 1,
wherein the total content of the compound represented by Formula 1, ethylene sulfate, and 1,3-propane sultone is 0.75 wt% to 1.60 wt% based on the total weight of the non-aqueous electrolyte.

**8.** The non-aqueous electrolyte of claim 1,
wherein the additive further includes at least one auxiliary additive selected from a group consisting of a cyclic carbonate-based compound, a nitrile-based compound, a benzene-based compound, a lithium salt-based compound, an amine-based compound, and a silane-based compound.

**9.** The non-aqueous electrolyte of claim 1,
wherein the organic solvent includes a carbonate-based organic solvent.

**10.** The non-aqueous electrolyte of claim 9,
wherein the carbonate-based organic solvent includes a cyclic carbonate-based organic solvent and a linear carbonate-based organic solvent.

**11.** A lithium secondary battery comprising a positive electrode;

a negative electrode facing the positive electrode;

a separator interposed between the negative electrode and the positive electrode; and
the non-aqueous electrolyte of claim 1.

**12.** The lithium secondary battery of claim 11,

wherein the negative electrode includes a negative electrode active material, and
the negative electrode active material includes at least one selected from a carbon-based active material and a silicon-based active material.

**13.** The lithium secondary battery of claim 11,

wherein the positive electrode includes a positive electrode active material, and
the positive electrode active material includes lithium iron phosphate.

【FIG. 1】

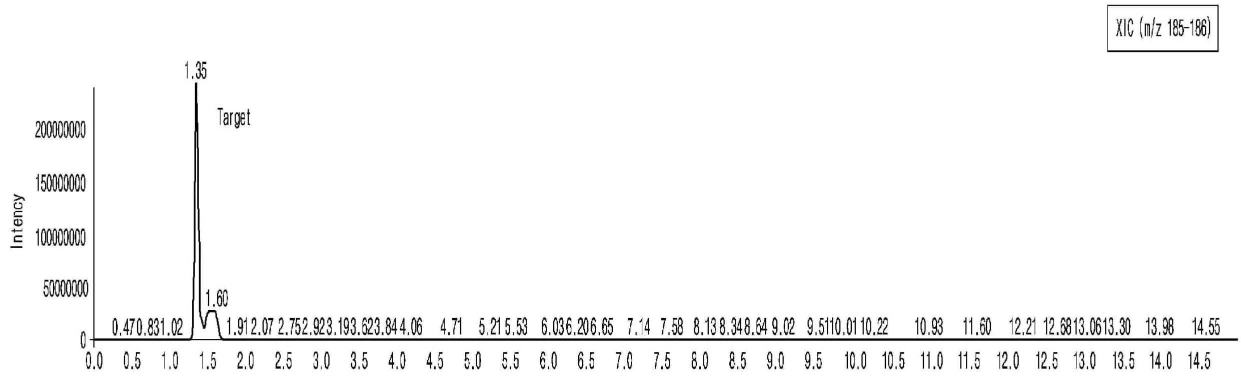
XIC (m/z 185-186)
1.35
Target
1.60
Intency

【FIG. 2】

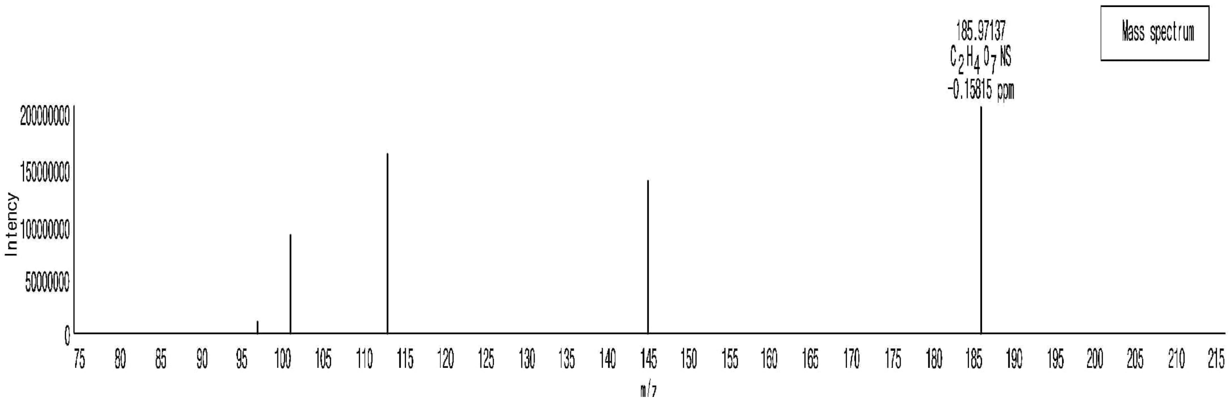
Mass spectrum
185.97137
$C_2H_4O_7NS$
-0.15815 ppm
Intency
m/z

【FIG. 3】

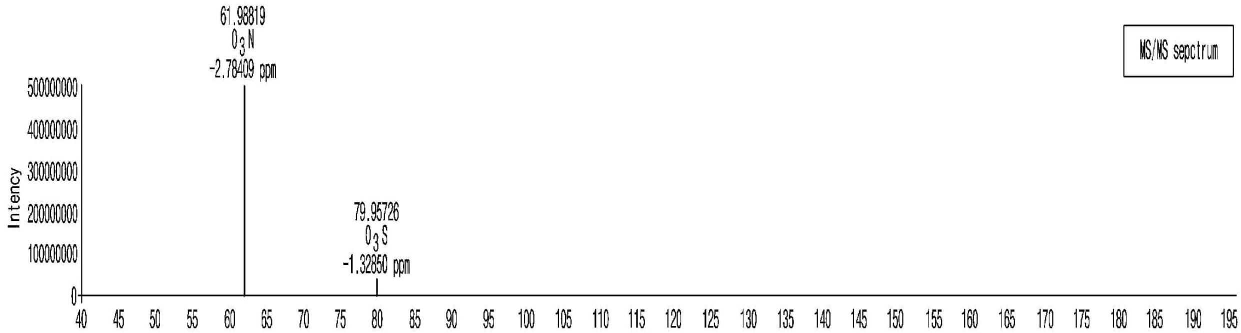
61.98819
$O_3N$
-2.78409 ppm
79.95726
$O_3S$
-1.32850 ppm
MS/MS sepctrum
Intency
500000000
400000000
300000000
200000000
100000000
0
40 45 50 55 60 65 70 75 80 85 90 95 100 105 110 115 120 125 130 135 140 145 150 155 160 165 170 175 180 185 190 195

【FIG. 4】

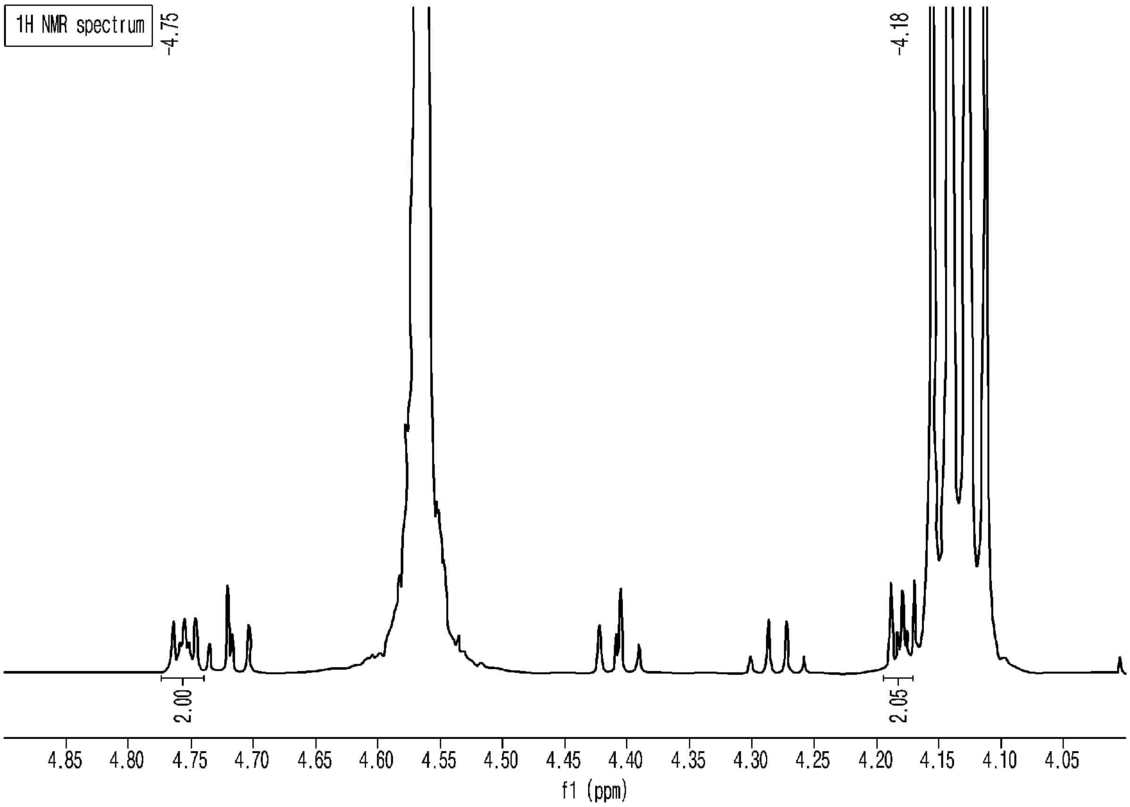
1H NMR spectrum
-4.75
-4.18
2.00
2.05
4.85 4.80 4.75 4.70 4.65 4.60 4.55 4.50 4.45 4.40 4.35 4.30 4.25 4.20 4.15 4.10 4.05
f1 (ppm)

【FIG. 5】

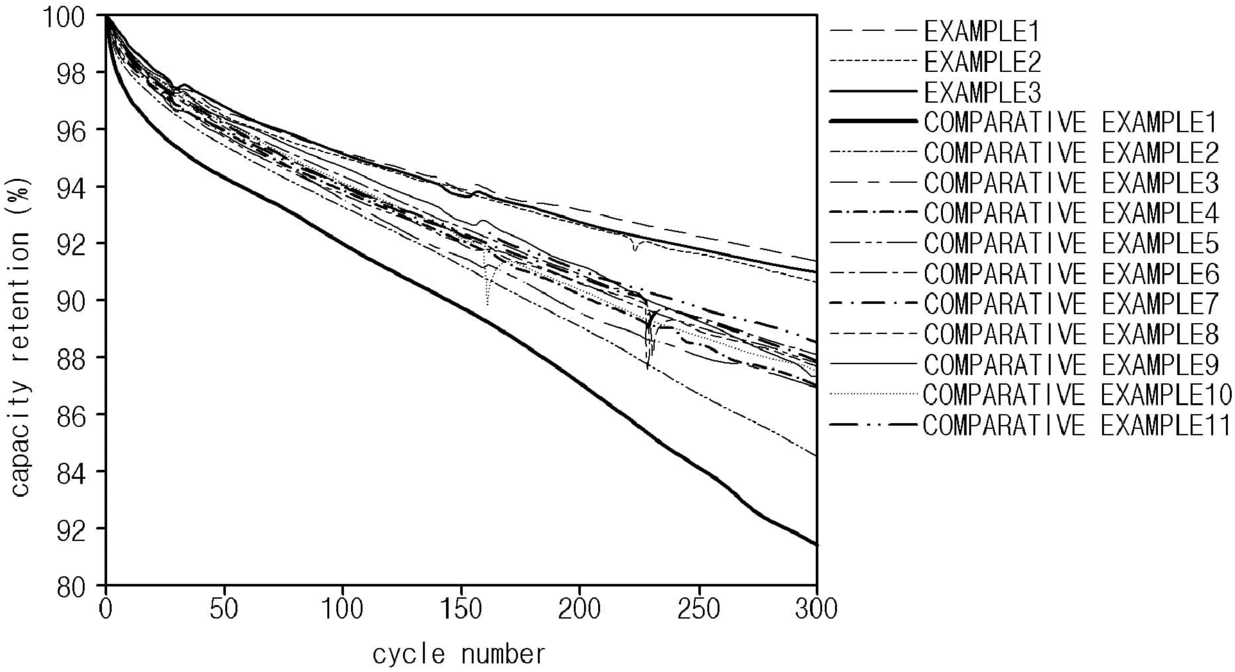
capacity retention (%)
100
98
96
94
92
90
88
86
84
92
80
0 50 100 150 200 250 300
cycle number
EXAMPLE1
EXAMPLE2
EXAMPLE3
COMPARATIVE EXAMPLE1
COMPARATIVE EXAMPLE2
COMPARATIVE EXAMPLE3
COMPARATIVE EXAMPLE4
COMPARATIVE EXAMPLE5
COMPARATIVE EXAMPLE6
COMPARATIVE EXAMPLE7
COMPARATIVE EXAMPLE8
COMPARATIVE EXAMPLE9
COMPARATIVE EXAMPLE10
COMPARATIVE EXAMPLE11

**INTERNATIONAL SEARCH REPORT**

International application No.
**PCT/KR2025/011738**

**A. CLASSIFICATION OF SUBJECT MATTER**

**H01M 10/0567**(2010.01)i; **H01M 10/0569**(2010.01)i; **H01M 10/052**(2010.01)i; **H01M 4/133**(2010.01)i; **H01M 4/134**(2010.01)i; **H01M 4/36**(2006.01)i; **H01M 4/587**(2010.01)i; **H01M 4/38**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 10/0567(2010.01); C07C 305/04(2006.01); C07D 295/088(2006.01); H01G 11/58(2013.01); H01G 11/64(2013.01); H01M 10/052(2010.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 설페이트(lithium sulfate), 에틸렌 설페이트(ethylene sulfate), 질산리튬 (lithium nitrate, LiNO3), 이차 전지(secondary battery)

**C. DOCUMENTS CONSIDERED TO BE RELEVANT**

| Category* | Citation of document, with indication, where appropriate, of the relevant passages | Relevant to claim No. |
|---|---|---|
| A | JP 2023-137680 A (MITSUI CHEMICALS INC.) 29 September 2023 (2023-09-29)<br>claims 1-10; paragraphs [0044], [0071]-[0075], [0082]; table 1 | 1-13 |
| A | KR 10-2022-0136119 A (LG ENERGY SOLUTION, LTD.) 07 October 2022 (2022-10-07)<br>claims 1, 7, 8; paragraphs [0108]-[0113], [0118] | 1-13 |
| A | KR 10-2015-0139847 A (UBE INDUSTRIES, LTD.) 14 December 2015 (2015-12-14)<br>claims 1, 16, 17; paragraphs [0308], [0322]-[0325], [0353] | 1-13 |
| A | WO 2019-082543 A1 (DAIKIN INDUSTRIES, LTD.) 02 May 2019 (2019-05-02)<br>claims 1, 3; paragraphs [0023], [0273], [0274], [0276] | 1-13 |
| A | KR 10-2023-0067595 A (SAMSUNG SDI CO., LTD.) 16 May 2023 (2023-05-16)<br>claim 1 | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 October 2025** | **30 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2025/011738**

| Patent document cited in search report | Publication date (day/month/year) | Patent family member(s) | Publication date (day/month/year) |
|---|---|---|---|
| JP 2023-137680 A | 29 September 2023 | None | |
| KR 10-2022-0136119 A | 07 October 2022 | CN 115485903 A | 16 December 2022 |
| | | CN 115485903 B | 27 June 2025 |
| | | EP 4131550 A1 | 08 February 2023 |
| | | EP 4131550 B1 | 17 July 2024 |
| | | JP 2023-524703 A | 13 June 2023 |
| | | JP 7408223 B2 | 05 January 2024 |
| | | US 11916197 B2 | 27 February 2024 |
| | | US 2022-0320583 A1 | 06 October 2022 |
| | | WO 2022-211320 A1 | 06 October 2022 |
| KR 10-2015-0139847 A | 14 December 2015 | CN 105074996 A | 18 November 2015 |
| | | CN 105074996 B | 03 October 2017 |
| | | EP 2983233 A1 | 10 February 2016 |
| | | EP 2983233 B1 | 06 March 2019 |
| | | JP 2015-159120 A | 03 September 2015 |
| | | JP 5729525 B2 | 03 June 2015 |
| | | JP 6372414 B2 | 15 August 2018 |
| | | KR 10-2188220 B1 | 08 December 2020 |
| | | US 2016-0027592 A1 | 28 January 2016 |
| | | US 9934911 B2 | 03 April 2018 |
| | | WO 2014-163055 A1 | 09 October 2014 |
| WO 2019-082543 A1 | 02 May 2019 | CN 111247681 A | 05 June 2020 |
| | | CN 111247681 B | 14 July 2023 |
| | | CN 116154292 A | 23 May 2023 |
| | | EP 3691016 A1 | 05 August 2020 |
| | | EP 3691016 B1 | 29 January 2025 |
| | | EP 4007031 A1 | 01 June 2022 |
| | | JP 2021-141069 A | 16 September 2021 |
| | | JP 6963194 B2 | 05 November 2021 |
| | | JP 7177367 B2 | 24 November 2022 |
| | | PL 3691016 T3 | 19 May 2025 |
| | | US 12243981 B2 | 04 March 2025 |
| | | US 2021-0194057 A1 | 24 June 2021 |
| KR 10-2023-0067595 A | 16 May 2023 | CN 107086324 A | 22 August 2017 |
| | | CN 107086324 B | 23 July 2021 |
| | | CN 110931853 A | 27 March 2020 |
| | | CN 110931853 B | 11 July 2023 |
| | | CN 110931854 A | 27 March 2020 |
| | | CN 110931854 B | 18 October 2022 |
| | | CN 110931855 A | 27 March 2020 |
| | | CN 110931856 A | 27 March 2020 |
| | | CN 110931856 B | 25 August 2023 |
| | | CN 110931857 A | 27 March 2020 |
| | | CN 110931858 A | 27 March 2020 |
| | | CN 110931858 B | 30 June 2023 |
| | | CN 110931859 A | 27 March 2020 |
| | | CN 110931859 B | 09 September 2022 |
| | | CN 117747951 A | 22 March 2024 |
| | | EP 3205655 A1 | 16 August 2017 |
| | | EP 3205655 B1 | 20 June 2018 |

Form PCT/ISA/210 (patent family annex) (July 2022)

**INTERNATIONAL SEARCH REPORT**
**Information on patent family members**

International application No.
**PCT/KR2025/011738**

| Patent document cited in search report | Publication date (day/month/year) | Patent family member(s) | Publication date (day/month/year) |
|---|---|---|---|
| | | KR 10-2017-0094966 A | 22 August 2017 |
| | | KR 10-2019-0133659 A | 03 December 2019 |
| | | KR 10-2020-0033198 A | 27 March 2020 |
| | | KR 10-2020-0033199 A | 27 March 2020 |
| | | KR 10-2020-0033201 A | 27 March 2020 |
| | | KR 10-2020-0033204 A | 27 March 2020 |
| | | KR 10-2023-0070191 A | 22 May 2023 |
| | | KR 10-2152365 B1 | 04 September 2020 |
| | | KR 10-2332336 B1 | 29 November 2021 |
| | | KR 10-2510887 B1 | 16 March 2023 |
| | | KR 10-2537229 B1 | 26 May 2023 |
| | | KR 10-2537230 B1 | 26 May 2023 |
| | | KR 10-2547067 B1 | 23 June 2023 |
| | | KR 10-2737099 B1 | 02 December 2024 |
| | | US 11114694 B2 | 07 September 2021 |
| | | US 11127978 B2 | 21 September 2021 |
| | | US 11145900 B2 | 12 October 2021 |
| | | US 11223044 B2 | 11 January 2022 |
| | | US 11251432 B2 | 15 February 2022 |
| | | US 11264644 B2 | 01 March 2022 |
| | | US 11264645 B2 | 01 March 2022 |
| | | US 11335952 B2 | 17 May 2022 |
| | | US 11637322 B2 | 25 April 2023 |
| | | US 2017-0237126 A1 | 17 August 2017 |
| | | US 2019-0020064 A1 | 17 January 2019 |
| | | US 2019-0020065 A1 | 17 January 2019 |
| | | US 2019-0020066 A1 | 17 January 2019 |
| | | US 2019-0020067 A1 | 17 January 2019 |
| | | US 2019-0020068 A1 | 17 January 2019 |
| | | US 2019-0020070 A1 | 17 January 2019 |
| | | US 2019-0020071 A1 | 17 January 2019 |
| | | US 2022-0407054 A1 | 22 December 2022 |
| | | US 2022-0407055 A1 | 22 December 2022 |
| | | US 2022-0407058 A1 | 22 December 2022 |
| | | US 2022-0407113 A1 | 22 December 2022 |
| | | US 2022-0407114 A1 | 22 December 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240104253
- KR 102377944